# EUROPEAN PATENT APPLICATION

(11) **EP 4 510 644 A1**
(43) Date of publication of application: **19.02.2025**
(21) Application number: 23799124.5
(22) Date of filing: 09.03.2023
(51) Int. Cl.: H04W 4/029

(54) **DATA ANALYSIS METHOD, DEVICE AND SYSTEM**

(30) Priority: 06.05.2022 CN 202210490402
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN)
(74) Representative: Goddar, Heinz J.
(86) International application number: PCT/CN2023/080594
(87) International publication number: WO 2023/213135

(57) **Abstract**

Embodiments of this application provide a data analytics method, an apparatus, and a system, and relate to the field of wireless communication technologies, to implement a time order in which a data analytics network element provides a location of a terminal for a consumer network function network element. The method includes: The data analytics network element obtains first indication information, where the first indication information indicates to provide a first network element with mobility analytics information used to determine a time order of one or more locations of the terminal in a first time period. The data analytics network element obtains mobility related information of the terminal from a second network element. The data analytics network element processes the mobility related information based on the first indication information, to obtain the mobility analytics information, where the mobility analytics information includes information used to determine the time order of the one or more locations of the terminal in the first time period. The data analytics network element sends the mobility analytics information to the first network element. This solution can enhance the mobility analytics information provided by the data analytics network element for the first network element.

## Description

This application claims priority to Chinese Patent Application No. 202210490402.9, filed with the China National Intellectual Property Administration on May 6, 2022 and entitled "DATA ANALYTICS METHOD, APPARATUS, AND SYSTEM", which is incorporated herein by reference in its entirety.

### TECHNICAL FIELD

This application relates to the field of wireless communication technologies, and in particular, to a data analytics method, an apparatus, and a system.

### BACKGROUND

A 5G network introduces a network data analytics function (Network Data Analytics Function, NWDAF) network element, which can receive a subscription request from a consumer (consumer) NF network element. Then, the NWDAF network element collects corresponding data from the network, and processes and analyzes the data, to obtain a statistical or predicted analytics result. Finally, the NWDAF network element feeds back the analytics result as mobility analytics information to the consumer NF network element.

Although the NWDAF network element may provide mobility analytics information of a terminal for the consumer NF network element, the mobility analytics information provided by the NWDAF network element for the consumer NF network element is incomplete, which is not conducive to performing data processing or information decision-making by the consumer NF network element.

### SUMMARY

Embodiments of this application provide a data analytics method, an apparatus, and a system, to implement a time order in which a data analytics network element provides a location of a terminal for a consumer network function network element.

Embodiments of this application provide the following technical solutions.

According to a first aspect, an embodiment of this application provides a data analytics method, including: A data analytics network element obtains first indication information that indicates the data analytics network element to a first network element, where the first indication information indicates to provide the first network element with mobility analytics information used to determine a time order of one or more locations of a terminal in a first time period. The data analytics network element obtains mobility related information of the terminal from a second network element. The data analytics network element processes the mobility related information based on the first indication information, to obtain the mobility analytics information. The mobility analytics information includes information used to determine the time order of the one or more locations of the terminal in the first time period. Alternatively, the mobility analytics information includes the information used to determine the time order of the one or more locations of the terminal in any sub-time period included in the first time period.

According to the data analytics method provided in embodiments of this application, in the method, the data analytics network element receives the first indication information. Because the first indication information indicates the data analytics network element to provide the first network element with the mobility analytics information used to determine the time order of the one or more locations of the terminal in the first time period, to help the first network element learn the time order of the locations of the plurality of locations of the terminal in one time period (for example, the first time period), the mobility analytics information provided by the data analytics network element for the first network element indicates the information about the time order of the one or more locations of the terminal in the first time period.

Optionally, the first indication information that indicates the data analytics network element to send the mobility analytics information of the terminal to the first network element may indicate the time order of the plurality of locations of the terminal in the first time period.

In a possible implementation of this application, the method provided in embodiments of this application may further include: The data analytics network element sends the mobility analytics information to the first network element.

In a possible implementation of this application, the data analytics network element may send the mobility analytics information to the first network element when a reporting trigger condition is met. For example, the data analytics network element may send the mobility analytics information to the first network element when load of the data analytics network element is lower than a preset load threshold, or the data analytics network element may send the mobility analytics information to the first network element in a time period indicated by the first network element. This is not limited in embodiments of this application.

In a possible implementation of this application, the first indication information may be sent by the first network element to the data analytics network element, or may be sent by another network element to the data analytics network element. This is not limited in embodiments of this application. When the another network element sends the first indication information to the data analytics network element, the another network element may further provide information about the first network element for the data analytics network element, for example, address information or identification information of the first network element.

In a possible implementation of this application, the method provided in embodiments of this application further includes: The data analytics network element receives second indication information. The second indication information indicates the data analytics network element to provide information about residence time of the terminal at each location. In this way, it is convenient to determine the residence time (duration) of the terminal at each location based on the information about the residence time.

In a possible implementation of this application, that the data analytics network element sends the mobility analytics information to the first network element further includes: The data analytics network element sends information about residence time of the terminal at each location to the first network element.

For example, the mobility analytics information further includes the information used to determine the residence time of the terminal at each location. In this solution, the information about the residence time of the terminal at each location may be included in the mobility analytics information. Alternatively, the information about the residence time of the terminal at each location may be sent to the first network element through other information other than the mobility analytics information. This is not limited in embodiments of this application.

In a possible implementation of this application, the first time period includes one or more sub-time periods, the terminal has one or more locations in each sub-time period, the sub-time period corresponds to one piece of time information and duration of the sub-time period, and the time information of the sub-time period is a start time point of the sub-time period.

In a possible implementation of this application, the mobility analytics information includes time information of each location of the terminal in each sub-time period of the first time period, the time information is a time point at which the terminal enters the location in the sub-time period, and time information corresponding to any location indicates a time order of the each location in the one or more locations in the sub-time period. In other words, generally, a quantity of locations of the terminal in each time period may be one or more. Therefore, the mobility analytics information includes time information associated with each location of the terminal in each sub-time period. By carrying the time information of each location in the mobility analytics information, a network element (for example, the first network element) that receives the mobility analytics information determines a time order of a plurality of locations of the terminal in a same sub-time period based on the time information of each location.

In a possible implementation of this application, the mobility analytics information includes information about the one or more locations that are of the terminal in each sub-time period of the first time period and that are sorted in ascending or descending time order. For example, in one sub-time period of the first time period, a location at an earlier time point is located before a location at a later time point.

In a possible implementation of this application, the mobility analytics information includes one or more pieces of sub-mobility analytics information, and each piece of sub-mobility analytics information corresponds to one sub-time period in the first time period. A plurality of locations of the terminal included in the sub-mobility analytics information in one sub-time period are sorted in ascending or descending time order. Alternatively, a plurality of locations of the terminal in each sub-time period that are included in the mobility analytics information are sorted in ascending or descending time order.

In a possible implementation of this application, when each piece of sub-mobility analytics information corresponds to one time period in a second time period, the data analytics network element may send each piece of sub-mobility analytics information to the first network element in an order of each time period. Alternatively, the data analytics network element may determine a number of each piece of sub-mobility analytics information. The number of each piece of sub-mobility analytics information is used to determine a time order of sub-mobility analytics information. For example, each piece of sub-mobility analytics information may carry information that indicates a time period. For example, the information that indicates the time period may be a start time point and duration of the time period, or the information that indicates the time period may be a start time point and an end time point of the time period.

In a possible implementation of this application, the second time period includes one or more time periods, the mobility analytics information includes one location of the terminal in each time period and first time information, the first time information is a time point at which the terminal starts to enter a location associated with the time period in the time period, and locations of the terminal are different in two sub-time periods that are adjacent in time. In this solution, one sub-time period may correspond to only one location of the terminal. This can avoid a problem that the plurality of locations of the terminal are repeated in the same time period.

In a possible implementation of this application, the mobility analytics information further includes duration of each sub-time period, and the duration of the sub-time period is used to reflect information about residence time of the terminal at a location associated with the sub-time period. In this solution, the duration of each sub-time period may be used to reflect residence time of the terminal at one location, and the information about the residence time of the terminal at each location is not added to the mobility analytics information.

In a possible implementation of this application, duration of the time period is less than a preset time length. For example, the duration of the time period may be less than the residence time of the terminal at each location.

In a possible implementation of this application, the mobility analytics information further includes the information used to determine the residence time of the terminal at each location.

In a possible implementation of this application, that the data analytics network element obtains mobility related information of the terminal from a second network element includes: The data analytics network element sends a second message to the second network element. The second message is used to request the second network element to provide mobility related information of the terminal in a second time period. The data analytics network element receives the mobility related information from the second network element, where the mobility related information includes each location of the terminal in the second time period and time information associated with each location, and the time information is a time point of entering the location.

In a possible implementation of this application, the second message carries third indication information, and the third indication information indicates to provide the data analytics network element with mobility related information used to determine a time order of one or more locations of the terminal in the second time period;
the mobility related information further includes information about the plurality of locations that are of the terminal in the second time period and that are sorted in ascending or descending order of the time information; or
the mobility related information further includes one location of the terminal in each sub-time period of the second time period and second time information, where the second time information is a time point at which the terminal enters a location associated with the sub-time period in the sub-time period, and locations of the terminal are different in two sub-time periods that are adjacent in time.

In a possible implementation of this application, that the data analytics network element sends a second message to the second network element further includes: The data analytics network element sends third indication information to the second network element. The third indication information indicates the second network element to provide the information used to determine the time order of the locations of the terminal. In this way, the first indication information may indicate the second network element to sort each location of the terminal or add the time information to each location of the terminal.

Optionally, the third indication information may be carried in the second message, or the third indication information may be carried in a third message other than the second message. This is not limited in embodiments of this application.

In a possible implementation of this application, that the data analytics network element sends a second message to the second network element may further include: The data analytics network element sends fourth indication information to the second network element. The fourth indication information indicates to provide the data analytics network element with information about residence time of one or more locations of the terminal in the second time period. Correspondingly, the mobility related information further includes the information used to determine the residence time of the terminal at each location in the second time period.

Optionally, the fourth indication information may be carried in the second message, or the fourth indication information may be carried in a message other than the second message, for example, a third message or a fourth message. This is not limited in embodiments of this application.

According to a second aspect, this application provides a data analytics method, including: A first network element sends first indication information to a data analytics network element. The first indication information indicates to provide the first network element with mobility analytics information used to determine a time order of one or more locations of a terminal in a first time period. The first network element receives the mobility analytics information from the data analytics network element, where the mobility analytics information includes information used to determine the time order of the one or more locations of the terminal in the first time period.

Optionally, the first time period may be a past time period, or may be a future time period. This is not limited in embodiments of this application.

In a possible implementation of this application, the method provided in embodiments of this application further includes: The first network element sends, to the data analytics network element, second indication information that indicates the data analytics network element to provide information about residence time of the terminal at each location. In this way, this helps the data analytics network element clarify, based on the second indication information, the information that is about the residence time of the terminal at each location and that needs to be provided for the first network element.

In a possible implementation of this application, the first indication information and the second indication information may be same indication information. In other words, the indication information not only indicates the data analytics network element to provide the information used to determine the time order of the locations of the terminal, but also indicates the data analytics network element to provide the information about the residence time of the terminal at each location.

In a possible implementation of this application, the first network element may indicate, in an explicit indication manner, the data analytics network element to provide the information used to determine the time order of the locations of the terminal, for example, send the first indication information. Certainly, the first network element may indicate, in an implicit indication manner, the data analytics network element to provide the information used to determine the time order of the locations of the terminal. For example, the first network element sends the second indication information instead of the first indication information. In this way, when receiving the second indication information, the data analytics network element may determine that the second indication information not only indicates the data analytics network element to provide the information used to determine the time order of the locations of the terminal, but also indicates the data analytics network element to provide the information about the residence time of the terminal at each location.

In a possible implementation of this application, that the first network element receives the mobility analytics information from the data analytics network element further includes: The first network element receives the information that is about the residence time of the terminal at each location and that is from the data analytics network element.

In a possible implementation of this application, the mobility analytics information includes time information of each location of the terminal in each sub-time period of the first time period. The time information is a time point at which the terminal enters the location in the sub-time period. Time information corresponding to any location indicates a time order of any of one or more locations in the sub-time period.

In a possible implementation of this application, the mobility analytics information includes the plurality of locations that are of the terminal in the second time period and that are sorted in ascending or descending time order. Alternatively, the mobility analytics information includes information about the one or more locations that are of the terminal in each sub-time period of the first time period and that are sorted in ascending or descending time order.

In a possible implementation of this application, the first time period includes one or more sub-time periods, the mobility analytics information includes one location of the terminal in each sub-time period and first time information, the first time information is a time point at which the terminal enters a location associated with the sub-time period in the sub-time period, and locations of the terminal are different in two sub-time periods that are adjacent in time.

In a possible implementation of this application, the mobility analytics information further includes duration of the sub-time period, and the duration of the sub-time period is used to reflect residence time of the terminal at a location in the sub-time period. In this solution, the duration of the sub-time period may be used to reflect the residence time of the terminal at the location in the sub-time period, and signaling overheads caused by adding the residence time of the terminal at each location to the mobility analytics information may be omitted.

In a possible implementation of this application, the duration of the sub-time period is less than a preset time length.

In a possible implementation of this application, the mobility analytics information further includes the information used to determine the residence time of the terminal at each location.

According to a third aspect, an embodiment of this application provides a communication apparatus. The communication apparatus can implement the method in the first aspect or any possible implementation of the first aspect, and therefore can further implement the beneficial effects in the first aspect or any possible implementation of the first aspect. The communication apparatus may be a data analytics network element, or may be an apparatus that supports a data analytics network element in implementing the method in the first aspect or any possible implementation of the first aspect, for example, a chip used in the data analytics network element. The communication apparatus may implement the foregoing method by software or hardware, or by executing corresponding software by hardware.

In an example, the communication apparatus may include a processing unit and a communication unit. The communication unit is configured to perform the receiving/sending related step performed by the data analytics network element in the first aspect or any possible implementation of the first aspect. The processing unit is configured to perform the processing related step performed by the data analytics network element in the first aspect or any possible implementation of the first aspect.

For example, when the communication apparatus is a chip or a chip system in the data analytics network element, the processing unit may be a processor, and the communication unit may be a communication interface. For example, the communication interface may be an input/output interface, a pin, a circuit, or the like. The processing unit executes instructions stored in a storage unit, to enable the data analytics network element to implement the data analytics method described in the first aspect or any possible implementation of the first aspect. The storage unit may be a storage unit (for example, a register or a cache) in the chip, or may be a storage unit (for example, a read-only memory or a random access memory) that is in the data analytics network element and that is outside the chip.

According to a fourth aspect, an embodiment of this application provides a communication apparatus. The communication apparatus can implement the method in the second aspect or any possible implementation of the second aspect, and therefore can further implement the beneficial effects in the second aspect or any possible implementation of the second aspect. The communication apparatus may be a first network element, or may be an apparatus that supports a first network element in implementing the method in the second aspect or any possible implementation of the second aspect, for example, a chip used in the first network element. The communication apparatus may implement the foregoing method by software or hardware, or by executing corresponding software by hardware.

In an example, the communication apparatus may include a processing unit and a communication unit. The communication unit is configured to perform the receiving/sending related step performed by the first network element in the second aspect or any possible implementation of the second aspect. The processing unit is configured to perform processing related steps performed by the first network element in the second aspect or any possible implementation of the second aspect.

For example, when the communication apparatus is a chip or a chip system in the first network element, the processing unit may be a processor, and the communication unit may be a communication interface. For example, the communication interface may be an input/output interface, a pin, a circuit, or the like. The processing unit executes instructions stored in a storage unit, to enable the first network element to implement the data analytics method described in the second aspect or any possible implementation of the second aspect. The storage unit may be a storage unit (for example, a register or a cache) in the chip, or may be a storage unit (for example, a read-only memory or a random access memory) that is in the first network element and that is outside the chip.

According to a fifth aspect, an embodiment of this application provides a computer-readable storage medium. The computer-readable storage medium stores a computer program or instructions. When the computer program or the instructions are run on a computer, the computer is enabled to perform the data analytics method described in the first aspect and any possible implementation of the first aspect. The computer may be a data analytics network element.

According to a sixth aspect, an embodiment of this application provides a computer-readable storage medium. The computer-readable storage medium stores a computer program or instructions. When the computer program or the instructions are run on a computer, the computer is enabled to perform the data analytics method described in the second aspect and any possible implementation of the second aspect. The computer may be a first user plane network element.

According to a seventh aspect, an embodiment of this application provides a computer program product including instructions. When the instructions are run on a computer, the computer is enabled to perform the data analytics method described in the first aspect or any possible implementation of the first aspect.

According to an eighth aspect, an embodiment of this application provides a computer program product including instructions. When the instructions are run on a computer, the computer is enabled to perform the data analytics method described in the second aspect or any possible implementation of the second aspect.

According to a ninth aspect, an embodiment of this application provides a communication apparatus, configured to implement the method in any one of the first aspect and the second aspect or the possible implementations of the first aspect and the second aspect. The communication apparatus may be the foregoing data analytics network element, an apparatus including the foregoing data analytics network element, or a component (for example, a chip) used in the data analytics network element. Alternatively, the communication apparatus may be the foregoing first network element, an apparatus including the foregoing first network element, or a component (for example, a chip) used in the first network element. The communication apparatus includes a corresponding module or unit for implementing the foregoing method. The module or unit may be implemented by hardware or software, or by hardware executing corresponding software. The hardware or the software includes one or more modules or units corresponding to the foregoing functions.

It should be understood that, the communication apparatus described in the ninth aspect may further include a bus and a memory. The memory is configured to store code and data. Optionally, at least one processor, a communication interface, and the memory are coupled to each other.

According to a tenth aspect, an embodiment of this application provides a communication apparatus. The communication apparatus includes a communication interface and at least one processor. The at least one processor communicates with the communication interface. When the communication apparatus runs, the at least one processor executes computer-executable instructions or a program stored in a memory, to enable the communication apparatus to perform the method in the first aspect or any possible implementation of the first aspect. For example, the communication apparatus may be a data analytics network element, or a chip used in a data analytics network element.

According to an eleventh aspect, an embodiment of this application provides a communication apparatus. The communication apparatus includes a communication interface and at least one processor. The at least one processor communicates with the communication interface. When the communication apparatus runs, the at least one processor executes computer-executable instructions or a program stored in a memory, to enable the communication apparatus to perform the method in the second aspect or any possible implementation of the second aspect. For example, the communication apparatus may be a first network element, or a chip used in a first network element.

According to a twelfth aspect, an embodiment of this application provides a communication apparatus. The communication apparatus includes one or more modules, configured to implement the method in any one of the first aspect and the second aspect, where the one or more modules may correspond to the steps in the method in any one of the first aspect and the second aspect.

According to a thirteenth aspect, an embodiment of this application provides a chip system. The chip system includes at least one processor, and the processor is configured to read and execute a computer program stored in a memory, to perform the method in the first aspect or any possible implementation of the first aspect.

According to a fourteenth aspect, an embodiment of this application provides a chip system. The chip system includes at least one processor, and the processor is configured to read and execute a computer program stored in a memory, to perform the method in the second aspect or any possible implementation of the second aspect.

Optionally, the chip system may be a single chip or a chip module including a plurality of chips.

Optionally, the chip system further includes a memory. The memory and the processor are connected through a circuit or a wire.

Optionally, the chip system further includes a communication interface. The communication interface is configured to communicate with a module other than the chip.

According to a fifteenth aspect, an embodiment of this application provides a communication system. The communication system includes a data analytics network element and a first network element. The data analytics network element is configured to perform the method in the first aspect or any possible implementation of the first aspect, and the first network element is configured to perform the method in the first aspect or any possible implementation of the first aspect.

Optionally, the communication system may further include one or more second network elements, configured to provide required data for the data analytics network element.

Any apparatus, computer storage medium, computer program product, chip, or communication system provided above is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a diagram of an architecture of a communication system according to an embodiment of this application;
FIG. 2a is a diagram of a 5G network architecture according to an embodiment of this application;
FIG. 2b is a diagram of another 5G network architecture according to an embodiment of this application;
FIG. 3 is a schematic flowchart of a data analytics method according to an embodiment of this application;
FIG. 4 is a schematic flowchart of a specific implementation procedure of a data analytics method according to an embodiment of this application;
FIG. 5 is a schematic flowchart of a specific implementation procedure of another data analytics method according to an embodiment of this application;
FIG. 6 is a diagram of a structure of a communication apparatus according to an embodiment of this application;
FIG. 7 is a diagram of a structure of a communication device according to an embodiment of this application; and
FIG. 8 is a diagram of a structure of a chip according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first network element and a second network element are merely intended to distinguish between different network elements, and are not intended to limit a sequence thereof. A person skilled in the art may understand that, the terms such as "first" and "second" do not limit a quantity or an execution sequence, and the terms such as "first" and "second" do not indicate a definite difference.

It should be noted that, in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Steps in a data analytics method provided in embodiments of this application are merely examples. Not all steps are mandatory steps, or not all content in each piece of information or message is mandatory. In a use process, addition or deletion may be performed as required.

In different embodiments, mutual reference is made to a same step or steps or messages having a same function in embodiments of this application.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. In embodiments of this application, an example in which the provided method is applied to an NR system or a 5th generation mobile communication technology (5th generation mobile networks or 5th generation wireless systems, 5th-Generation, 5G) network is used for description.

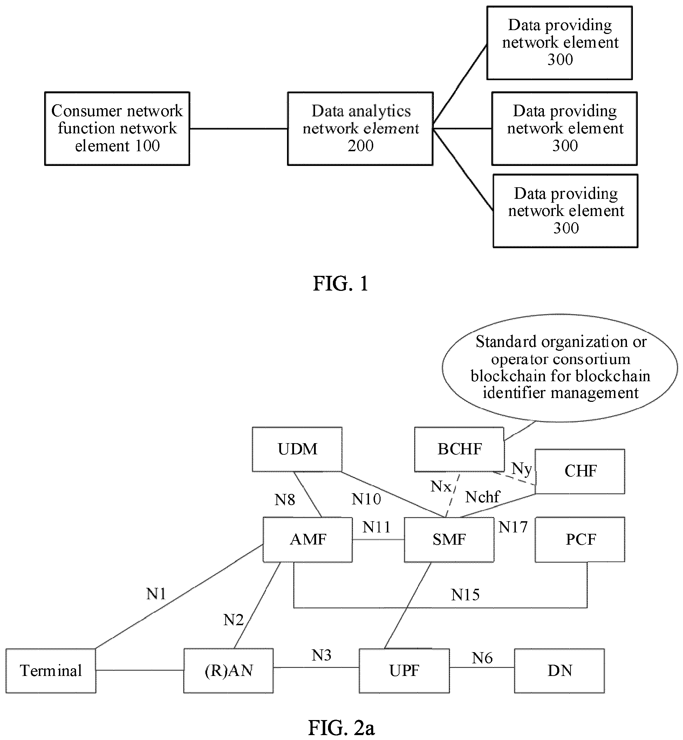

FIG. 1 is a diagram of an architecture of a communication system according to an embodiment of this application. The system includes a consumer network function network element 100, a data analytics network element 200, and one or more data providing network elements 300.

The data analytics network element 200 is configured to provide a mobility analytics result of a terminal for the consumer network function network element 100, for example, in a moving process of the terminal, one or more locations of the terminal in one time period and information used to determine a time order in which the terminal enters each location.

The data providing network element 300 is configured to provide the data analytics network element 200 with mobility related information that is of the terminal and that is used to obtain the mobility analytics result of the terminal, for example, mobility information of the terminal or service data related to mobility of the terminal.

In an example, the one or more data providing network elements 300 may include an application network element, a mobility management network element, or a network management network element.

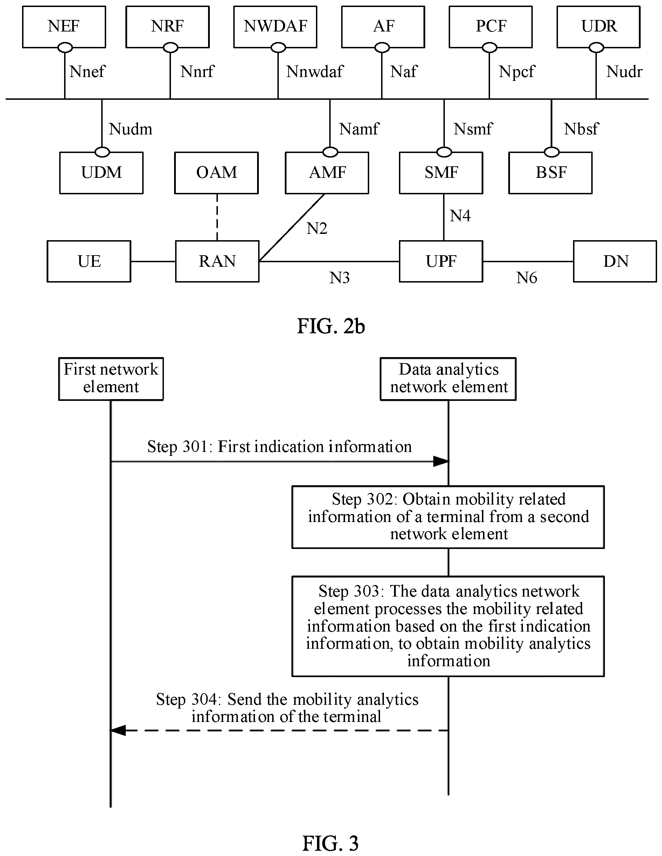

For example, the system shown in FIG. 1 is applied to the 5G network architecture shown in FIG. 2a or FIG. 2b. The consumer network function network element 100 may be a network element and a network management network element, for example, OAM, in a 5G core network (5G core, 5GC) shown in FIG. 2a or FIG. 2b. For example, the network element in the 5G core network (5G core, 5GC) may be any one of the following network elements: a policy control function (policy control function, PCF) network element, a network slice selection function (network slice selection function, NSSF) network element, an access and mobility management function (Access and Mobility Management Function, AMF) network element, a session management function (session management function, SMF) network element, a network capability exposure function (network exposure function, NEF) network element, an application function (application function, AF) network element, an NWDAF network element, and a data collection coordination function (Data Collection Coordination Function, DCCF) network element. The application network element may be the AF network element, the mobility management network element may be the AMF network element, and the network management network element may be an OAM network element. In a 5G network, the data analytics network element in embodiments of this application may be a network data analytics function (network data analytics function, NWDAF) network element in the 5GC, may be a management data analytics function (Management Data analytics Function, MDAF) network element of a network management system, or may even be a data analytics network element on a radio access network (Radio Access Network, RAN) side.

Optionally, in addition to the foregoing network elements, the 5G network architecture shown in FIG. 2a or FIG. 2b may further include a terminal, an (R)AN device, a user plane function (user plane function, UPF) network element, a unified data management (unified data management, UDM) network element, a data network (data network, DN), a user data repository (user data repository, UDR), a binding support function (binding support function, BSF) network element, a charging function (Charging Function, CHF) network element, and a network repository function (network repository function, NRF) network element. The NRF network element is mainly configured to discover network elements.

In FIG. 2a, the terminal accesses the network through the (R)AN device, and the terminal communicates with the AMF network element through an N1 interface (N1 for short). The SMF network element communicates with one or more UPF network elements through an N4 interface (N4 for short). The UPF network element communicates with the DN through an N6 interface (N6 for short). The (R)AN device communicates with the AMF network element through an N2 interface (N2 for short). The (R)AN device communicates with the UPF network element through an N3 interface (N3 for short). Control plane network elements may also interact with each other through a service-based interface. For example, as shown in FIG. 2b, the AMF network element, the SMF network element, the UDM network element, and the PCF network element interact with each other through a service-based interface. For example, a service-based interface exhibited by the AMF network element may be Namf. A service-based interface exhibited by the SMF network element may be Nsmf. A service-based interface exhibited by the UDM network element may be Nudm. A service-based interface exhibited by the PCF network element may be Npcf. A service-based interface exhibited by the NSSF network element may be Nnssf. A service-based interface exhibited by the NEF network element may be Nnef. A service-based interface exhibited by the AF network element may be Naf. A service-based interface exhibited by the NRF network element may be Nnrf. A service-based interface exhibited by the BSF network element may be Nbsf. A service-based interface exhibited by the CHF network element may be Nchf (not shown in FIG. 2b). A service-based interface exhibited by the NWDAF network element may be Nnwdaf. A service-based interface exhibited by the BSF network element may be Nbsf. A service-based interface exhibited by the NRF network element may be Nnrf. It should be understood that, for related descriptions of names of various service-based interfaces, refer to a diagram of a 5G system architecture (5G system architecture) in a current technology. Details are not described herein.

It should be noted that, for example, FIG. 2a and FIG. 2b merely show, for example, one UPF network element and one SMF network element. Certainly, FIG. 2a and FIG. 2b may include a plurality of UPF network elements and a plurality of SMF network elements, for example, include an SMF network element 1 and an SMF network element 2. This is not specifically limited in embodiments of this application.

It should be noted that, the (R)AN device, the AMF network element, the SMF network element, the UDM network element, the UPF network element, the PCF network element, and the like in FIG. 2a and FIG. 2b are merely names, and the names do not constitute any limitation on the devices. In the 5G network and another future network, network elements or entities corresponding to the (R)AN device, the AMF network element, the SMF network element, the UDM network element, the UPF network element, and the PCF network element may alternatively have other names. This is not specifically limited in embodiments of this application. For example, the UDM network element may alternatively be replaced with a home subscriber server (home subscriber server, HSS), a user subscription database (user subscription database, USD), a database entity, or the like. This is uniformly described herein, and details are not described subsequently.

A terminal is a device that allows a user to access a network service. In a 3GPP standard, an interface between the terminal and a network is a radio interface.

The terminal (terminal) may include various handheld devices, vehicle-mounted devices, wearable devices, and computing devices that have a wireless communication function, or other processing devices connected to a wireless modem. The terminal may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as terminals.

It should be understood that, the terminal in embodiments of this application may be further a terminal device in an internet of things or a terminal in a plurality of vertical industry application fields such as a port, an intelligent factory, railway transportation, logistics, an uncrewed aerial vehicle, and a driverless car, for example, a mobile robot (mobile robot), an automated guided vehicle (automated guided vehicle, AGV), a driverless car, a control device and a sensor on a train, or a control device and a sensor (sensor) deployed in a factory.

For example, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs. The terminal may alternatively be a sensor device used in a factory.

The NWDAF network element has a network data analytics function. The NWDAF network element has data collection, training, analytics, and inference functions, and may be configured to: collect related data from a network network element, a third-party service server, a terminal device, or a network management system, perform analytics training based on the related data, and provide a data analytics result for the network network element, the third-party service server, the terminal device, or the network management system. The data analytics result may assist a network in selecting a service quality parameter of a service, or assist the network in executing traffic routing, or assist the network in selecting a background data transfer policy, or the like.

A network function (Network Function, NF) network element may be, for example, a PCF network element, an AMF network element, an SMF network element, an NEF network element, an AF network element, or an NWDAF network element.

The AMF network element is mainly responsible for management such as user access and mobility, including user registration, reachability, mobility management, N1/N2 interface signaling transmission, access authentication, authorization, and the like.

The AF network element transfers a requirement of an application side on a network side, for example, a QoS requirement or user status event subscription. The AF may be a third-party functional entity, or may be an application server deployed by an operator.

OAM: Operations, administration, and management, and network management for short. The OAM is mainly used to complete work such as analysis, prediction, planning, and configuration of a routine network and a routine service, and test and perform fault management on the network and the service of the network. The OAM may interact with the RAN, to obtain a UE location that is measured by the RAN or measured and reported by the UE and that is on a RAN side.

The NWDAF network element supports the consumer NF network element in requesting/subscribing to the mobility analytics result of the terminal. After receiving the mobility analytics result that is of the terminal and that is requested/subscribed by the consumer NF network element, the NWDAF network element needs to collect corresponding data from the OAM network element, the AMF network element, and the AF network element, to obtain the corresponding analytics result through derivation. Specifically, the NWDAF network element may obtain a location of the terminal from the OAM network element, where the location of the terminal at the OAM network element is included in minimization of drive tests (Minimization of Drive Tests, MDT) data. The MDT data is measurement report data reported by the terminal to the OAM network element through a base station and/or measurement report data of each terminal measured by the base station and then reported to the OAM network element, where the measurement report data includes the location of the terminal. In addition, the NWDAF network element may obtain mobility related network data of the terminal from the AMF network element, for example, a location of the terminal, a location trend of the terminal, and an access behavior trend of the terminal. Specific content is shown in Table 1.

**Table 1 Mobility information that is of a terminal and that is collected from an AMF network element**

| Data type | Description |
|---|---|
| UE ID | Identifier of the terminal, namely, SUPI |
| UE locations (L.max) | Location of the terminal |
| >UE location | TAs/cells that the terminal enters |
| >Timestamp | Timestamp when the AMF network element detects that the terminal enters the location. |
| Type Allocation code (TAC) | Indicates a terminal model and vendor information of the terminal, where terminals with the same TAC may have similar mobility behavior, and a terminal whose mobility behaviour is unlike other terminals with the same TAC may be an abnormal one. |
| Frequent Mobility Registration Update | The terminal may re-select between neighbour cells due to radio coverage fluctuations. This may lead to a plurality of mobility registration updates if the cells belong to different registration areas. N mobility registration updates performed within a period M is regarded as abnormal ping-pong behaviour, where N and M are configurable parameters. |
| UE access behaviour trends | Terminal access behavior trends that are metrics on terminal state transitions (such as access, registration and connection states, and handover). |
| UE location trends | Terminal location trends |

For example, the identifier of the terminal in embodiments of this application may be one or more of the following: an internet protocol (internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identity (international mobile subscriber identity, IMSI), an international mobile equipment identity (international mobile equipment identity, IMEI), an IP address, and a mobile subscriber international integrated services digital network number (mobile subscriber international integrated services digital network number, MSISDN). For an identifier of a terminal in the following embodiments, refer to the description herein. Details are not described subsequently again.

The NWDAF network element may further obtain mobility related service data of the terminal from the AF network element (which may be an AF network element inside a core network or a third-party AF network element). Details are shown in Table 2.

**Table 2 Mobility related service data that is of a terminal and that is collected from an AF network element**

| Data type | Description |
|---|---|
| UE ID | External UE identifier, such as a GPSI |
| Application ID | Application identifier, identifying an application that provides information |
| UE trajectory (1..max) | UE trajectory information |
| >UE location | Geographical area (which may be an area identified by longitude and latitude) that the UE enters |
| >Timestamp | Timestamp when the UE enters the area |

Based on the foregoing information, the NWDAF network element may perform historical data analytics, to obtain a statistical analytics result of mobility of the terminal, as shown in Table 3.

**Table 3 Statistical analytics result of mobility of a terminal**

| Data type | Description |
|---|---|
| UE group ID or UE ID | Identifies a group of terminals or one terminal. |
| Time slot entry (1..max) | List of time slots during an analytics target periodicity |
| >Time slot start | Start time point of a time slot |
| >Duration | Length of the time slot |
| >UE location (L.max) | A group of locations in which the terminal is located within a period of time specified by Time slot start and Duration. |
| >>UE location | TAs/cells in which the terminal stays |
| >>Ratio | Percentage of terminals at the location when an identifier (group ID) of a group in which the terminals are located is provided |

Alternatively, the NWDAF network element may train an artificial intelligence (Artificial Intelligence, AI) model based on historical data, and predict mobility information of the terminal in a future time period by using the AI model, as shown in Table 4.

**Table 4 Prediction analytics result of mobility of a terminal**

| Data type | Description |
|---|---|
| UE group ID or UE ID | Identifies a group of terminals or one terminal. |
| Time slot entry (1..max) | List of time slots during an analytics target periodicity (future time period). |
| >Time slot start | Start time point of a time slot |
| >Duration | Length of the time slot |
| >UE location (L.max) | A group of locations that are predicted and in which the terminal is located within a period of time specified by Time slot start and Duration. |
| >>UE location | Predicted TAs/cells in which the terminal may stay |
| >>Confidence | Predicted confidence |
| >>Ratio | Percentage of terminals at the locations when a group ID of the terminals is provided |

Time slots in the analytics result are to be provided in time order (different time slots may overlap). If the analytics result is for a group of terminals (to be specific, provides group IDs of the terminals), these terminals may be located in different location areas (for example, location areas identified by TAs/cells) in the same time slot, and a quantity proportion of terminals in different location areas may also be different. In the analytics result, these location areas are to be listed in descending order based on the quantity proportion of terminals (where location areas in which a quantity proportion of UE is very small may also not be listed due to a limitation of a maximum number of entries of the analytics result).

The mobility analytics result (which may also be referred to as mobility analytics information) of the terminal obtained by the NWDAF network element may be locations of a plurality of terminals in a same time slot (time period) obtained through statistics collection or prediction, or a plurality of locations of one terminal at different time points, as shown in Table 5. However, currently, a mobility analytics result of the terminal obtained by a data analytics network element does not define an order of a plurality of locations in the same time slot. However, in some scenarios, when performing data processing or information decision-making, the consumer NF network element needs to obtain a time order of the plurality of locations of the terminal from the NWDAF network element. For example, when traffic congestion or traffic accident warning information is sent to a vehicle running on a road, whether the vehicle is located on an uplink lane or a downlink lane of the road needs to be determined based on location direction information, and then correct notification or warning information can be sent to the vehicle.

**Table 5 Content of a mobility analytics result of a terminal determined by an NWDAF network element in a conventional technology**

| | | | | |
|---|---|---|---|---|
| >Time slot start 1 | 2022-04-24 11:37:18 | | >Time slot start 2 | 2022-04-24 11:37:21 |
| >Duration 1 | 3s | | >Duration 2 | 5s |
| >UE location (1..max) | | | >UE location (1..max) | |
| >>UE location 11 | Cell (cell) 1 | | >>UE location 21 | Cell (cell) 3 |
| >>UE location 12 | Cell (cell) 2 | | >>UE location 22 | Cell (cell) 2 |
| | | | >>UE location 23 | Cell (cell) 5 |

Table 5 shows, in a form of a table, the mobility analytics result of the terminal provided by the NWDAF network element. It may be learned from Table 5 that, the mobility analytics result includes a plurality of locations of the terminal in one time slot (for example, a time slot 1, namely, a time slot determined by Time slot start 1 and Duration 1). For example, a location 11 indicates that the terminal is located in a cell 1, and a location 12 indicates that the terminal is located in a cell 2. However, when obtaining the mobility analytics result of the terminal shown in Table 5, the consumer network function network element may learn that the terminal is located in the cell 1 and the cell 2 in the time slot 1, but cannot determine an order of time in which the terminal is located in the cell 1 and the cell 2, to be specific, whether the terminal is first located in the cell 1 or the cell 2. In other words, the consumer network function network element cannot determine whether the terminal moves from the cell 1 to the cell 2 or from the cell 2 to the cell 1.

On this basis, embodiments of this application provide a data analytics method, so that mobility analytics information of a terminal provided by a data analytics network element for a consumer network function network element may indicate a time order of the terminal at different locations, to assist the consumer NF network element in performing data processing or information decision-making.

In embodiments of this application, a specific structure of an entity for performing the data analytics method is not specially limited in embodiments of this application, provided that the entity can run a program that records code of the data analytics method in embodiments of this application, to perform communication according to the data analytics method in embodiments of this application. For example, an entity for performing the data analytics method provided in embodiments of this application may be a functional module that is in a data analytics network element and that can invoke and execute a program, or may be a communication apparatus used in a data analytics network element, for example, a chip, a chip system, or an integrated circuit. The chip, the chip system, and the integrated circuit may be disposed inside the data analytics network element, or may be independent of the data analytics network element. This is not limited in embodiments of this application. An entity for performing the data analytics method provided in embodiments of this application may be a functional module that is in a first network element and that can invoke and execute the program, or may be a communication apparatus used in a first network element, for example, a chip, a chip system, or an integrated circuit. The chip, the chip system, or the integrated circuit may be disposed inside the first network element, or may be independent of the first network element. This is not limited in embodiments of this application.

FIG. 3 is a schematic flowchart of a data analytics method according to an embodiment of this application. The method includes the following steps.

Step 301: A first network element sends first indication information to a data analytics network element. Correspondingly, the data analytics network element receives the first indication information from the first network element. The first indication information indicates the data analytics network element to send mobility analytics information of a terminal.

Specifically, the first indication information indicates the data analytics network element to send, to the first network element, the mobility analytics information that indicates a location order of the terminal. In other words, the first indication information indicates that the mobility analytics information sent by the data analytics network element to the first network element needs to include information used to determine an order of a plurality of locations of the terminal.

With reference to FIG. 1, the first network element may be the consumer network function network element 100 shown in FIG. 1. The data analytics network element may be an NWDAF network element.

Optionally, the first indication information is carried in a first message, and the first message is used to request the data analytics network element to provide the mobility analytics information of the terminal. Alternatively, the first indication information is carried in a message other than the first message. For example, the first network element first sends the first message to the data analytics network element, and then sends the first indication information. Alternatively, the first indication information and the first message may be carried in a same message (for example, a data subscription message or a data request message) and sent to the data analytics network element. This is not limited in embodiments of this application. The first message is used to request the data analytics network element to provide the mobility analytics information of the terminal, or is used to subscribe to the mobility analytics information of the terminal from the data analytics network element. This is not limited in embodiments of this application.

In the embodiment shown in FIG. 3, an example in which the first indication information is provided by the first network element for the data analytics network element is used. Certainly, in an actual process, the first indication information may also be sent to the data analytics network element by a network element other than the first network element. When sending the first indication information to the data analytics network element, the another network element may further provide information about the first network element, to indicate the data analytics network element to send the obtained mobility analytics information to the first network element.

Optionally, the first message may further carry information used to determine a collection object (for example, the terminal). For example, the first message may further carry one or more of identification information of one or more terminals, information about a target area, information about a network slice, and information about an application.

For example, the first message carries identification information of one or more terminals, which indicates that the first network element expects the data analytics network element to provide mobility analytics information of a specific terminal identified by the identification information of the one or more terminals, namely, locations of each terminal at different time points and an order of a plurality of locations of one terminal at different time points. For example, the first message carries identification information of a terminal 0, which indicates that the first network element expects the data analytics network element to provide mobility analytics information of the terminal 0.

For example, the first message may further carry information about a target area (for example, a TA or a cell), which indicates that the first network element expects the data analytics network element to provide mobility analytics information of one or more terminals located in the target area. For example, the first message carries information about a target area and identification information of one or more terminals, which indicates that the first network element expects the data analytics network element to provide mobility analytics information of the terminal that is located in the target area and that includes the identification information of the one or more terminals. For example, if the target area is a cell 1, the identification information of the one or more terminals includes that of a terminal 1 to a terminal 4, and the cell 1 includes a terminal 0 to a terminal 100, the first network element may request, from the data analytics network element through the information about the target area and the identification information of the terminal 1 to the terminal 4, mobility analytics information of the terminal 1 to the terminal 4 that are located in the cell 1.

Optionally, the first message may further include an analytics target time period (Analytics target period), to indicate that the first network element expects to obtain mobility analytics information of the terminal in the analytics target time period. For example, the analytics target time period may be a past time period, or may be a future time period (which indicates that the first network element wants to obtain a predicted mobility analytics result of the terminal). For example, the analytics target time period may be a past time period relative to a current time point. For example, if the current time point is 11:00, the analytics target time period may be a time period from 8:00 to 9:00, or may be a future period of time relative to the current time point. If the current time point is 11:00, the analytics target time period may be a time period between 12:00 and 13:00.

The analytics target time period is provided, so that the data analytics network element can determine whether the mobility analytics information determined for the terminal is information about collecting statistics on locations of the terminal (namely, mobility statistics information of the terminal) in a past time period or information about predicting locations of the terminal (namely, mobility prediction information of the terminal) in a future time period.

Optionally, the first message may further carry a prediction indication or a statistics indication. The statistics indication indicates the data analytics network element to collect statistics on mobility of the terminal in a past time period. The prediction indication indicates the data analytics network element to predict mobility of the terminal in a future time period.

It may be understood that, when the first message does not carry the analytics target time period but carries the prediction indication or the statistics indication, the data analytics network element may determine to use a period of time before a current moment as the analytics target time period, or may select a period of time after a current moment as the analytics target time period. This is not limited in embodiments of this application.

Optionally, when the first message includes the analytics target time period, the first message may include the prediction indication or the statistics indication, or may not include the prediction indication or the statistics indication. This is not limited in embodiments of this application.

Optionally, the first message may further include one or more pieces of time information (for example, time slot), and lengths of different pieces of time information may be the same or may be different. For example, the length of the time information may be three seconds or five seconds. The one or more pieces of time information are provided, so that the data analytics network element determines a location order of the terminal that moves in each piece of time information. For example, the length of the time information is three seconds, which indicates that the data analytics network element is expected to provide a time order of locations of the terminal that moves in the three seconds.

For example, the first message carries identification information of the terminal 0 and a past time period between 8:00 and 10:00, which indicates that the first network element expects the data analytics network element to provide an order of locations of the terminal 0 in the past time period between 8:00 and 10:00.

For example, the first message carries information about an area of interest (area of interest, AoI) and the past time period between 8:00 and 10:00, which indicates that the first network element expects the data analytics network element to provide a time order of locations of each terminal in the past time period between 8:00 and 10:00 in the area of interest indicated by the information about the AoI.

For example, the first message carries the information about the AoI and the prediction indication, which indicates that the first network element expects the data analytics network element to predict an order of locations of each terminal that moves in a period of time in the area of interest indicated by the information about the AoI.

Step 302: The data analytics network element obtains mobility related information of the terminal from a second network element. The mobility related information includes at least time information associated with each location of the terminal in a second time period.

In an example, the second network element may be any one or more of an AMF network element, an AF network element, or an OAM network element. Mobility related information provided by the AMF network element, the AF network element, or the OAM network element for the data analytics network element is shown in Table 1 to Table 3. Details are not described herein again.

Step 303: The data analytics network element processes the mobility related information based on the first indication information, to obtain the mobility analytics information. The mobility analytics information includes information used to determine a time order of one or more locations of the terminal in a first time period.

Optionally, the mobility analytics information may further include the one or more locations of the terminal in the first time period.

It may be understood that, when the data analytics network element obtains the analytics target time period, the first time period may be the analytics target time period, or may be one time period in the analytics target time period. When the data analytics network element does not obtain the analytics target time period, if the data analytics network element determines that the mobility prediction information of the terminal needs to be obtained, the first time period may be a future period of time determined by the data analytics network element. When the data analytics network element does not obtain the analytics target time period, if the data analytics network element determines that the mobility statistics information of the terminal needs to be obtained, the first time period may be a past time period determined by the data analytics network element.

Optionally, the mobility related information in embodiments of this application may be mobility related information of the terminal in the first time period. When the data analytics network element determines that the provided mobility analytics information is used to predict an order of locations of the terminal that moves in a future period of time, the first time period is the future time period. For example, in this case, the first time period is after the second time period, and the second time period is a past time period. When the data analytics network element determines to collect statistics on the order of the locations of the terminal that moves in the past time period, the first time period may be the second time period, or may be a part of the second time period, or the first time period may include the second time period. This is not limited in embodiments of this application.

Step 304: The data analytics network element sends the mobility analytics information to the first network element. Correspondingly, the first network element receives the mobility analytics information from the data analytics network element.

According to the data analytics method provided in embodiments of this application, in the method, the data analytics network element obtains the first indication information. Because the first indication information indicates the data analytics network element to provide the mobility analytics information of the terminal, to help the first network element learn of a time order of a plurality of locations of the terminal in one time period (for example, the second time period), to determine a moving direction of the terminal, the mobility analytics information provided by the data analytics network element for the first network element indicates information about a time order of the one or more locations of the terminal in the second time period.

To determine residence time of the terminal at each location, in a possible embodiment of this application, the method provided in embodiments of this application further includes: The first network element sends second indication information to the data analytics network element. Correspondingly, the data analytics network element receives the second indication information from the first network element. The second indication information indicates the data analytics network element to report information about the residence time of the terminal at each location.

Same as above, the data analytics network element may also obtain the second indication information from another network element.

In a possible implementation of this application, even if the data analytics network element does not receive the second indication information, the data analytics network element may also determine that the mobility analytics information includes the information about the residence time of the terminal at each location.

In a possible implementation of this application, when the data analytics network element determines that the information about the residence time of the terminal at each location needs to be provided, the mobility analytics information further includes the information used to determine the residence time of the terminal at each location. The information used to determine the residence time of the terminal at each location may be information about residence time associated with each location. In addition to the information about the residence time associated with each location, time information associated with two locations that are adjacent in time may be further used to reflect the residence time of the terminal at each location, or when one sub-time period corresponds to a location of one terminal, duration of the sub-time period may reflect information about residence time of the terminal at the location in the sub-time period.

In this way, the first network element may obtain the information about the residence time of the terminal at each location based on the time information associated with the two locations that are adjacent in time and duration of a time period to which each location belongs.

For example, the terminal enters a location 1 at 13:12:10 on May 1, 2022 in a time period a, and the terminal enters a location 2 at 13:12:15 on May 1, 2022 in the time period a. In this way, it may be determined that information about residence time of the terminal at the location 1 is 5s. If the terminal enters a location 3 at 13:12:19 on May 1, 2022 in a time period b adjacent to the time period a, it may be determined that information about residence time of the terminal at the location 2 is 4s. Assuming that duration of the time period a is 9s, after the information about the residence time of the location 1 is obtained based on a time difference between the time of the location 1 and the time of the location 2, that the information about the residence time of the terminal at the location 2 in the time period a is 4s may be obtained based on the duration of 9s of the time period a.

For example, if the data analytics network element receives the second indication information from the first network element, the data analytics network element may determine to provide the information about the residence time of the terminal at each location.

The following describes content of the mobility analytics information from different aspects.

Manner (1): Each location included in the mobility analytics information is associated with one piece of time information (for example, a timestamp).

In a possible implementation of this application, the mobility analytics information includes time information of each location of the terminal in each sub-time period of the first time period. In other words, the mobility analytics information includes time information associated with each location of the terminal in each sub-time period of the first time period. It may be understood that, when the first time period includes one sub-time period, the sub-time period is the first time period.

The time information is a time point at which the terminal enters a location in one sub-time period, and time information of a plurality of locations is used to determine an order in which the terminal moves among the plurality of locations.

Generally, the terminal may always reside at one location in one sub-time period. A mobility terminal may be at a plurality of locations in one sub-time period. Therefore, each location of the terminal in the same sub-time period may be associated with one piece of time information.

Optionally, when the first time period includes a plurality of sub-time periods, duration of each sub-time period may be the same or may be different. This is not limited in embodiments of this application. When the first time period includes one sub-time period, the first time period is the sub-time period. For example, the first time period includes 10 seconds. Assuming that the terminal is located at eight locations in the 10 seconds, the mobility analytics information may include time information associated with at least eight locations. This is because when the second network element may obtain the mobility related information of the terminal, assuming that the AMF network element collects the location of the terminal every two seconds, and the location of the terminal may not change within two adjacent collection time periods, the terminal may correspond to two or more pieces of time information at a same location.

In a possible implementation of this application, when determining the mobility analytics information, the data analytics network element may divide the first time period into one or more sub-time periods, and then determine time information associated with each location of the terminal in each sub-time period. In other words, the mobility analytics information includes one or more pieces of sub-mobility information, and each piece of sub-mobility information includes time information associated with each location of the terminal in one time period of the first time period.

It may be understood that, assuming that the data analytics network element collects content shown in Table 1 from the AMF network element, and the content includes locations (to be specific, each location is associated with one piece of time information) of the terminal at different time points, the data analytics network element may obtain, based on the locations that are of the terminal at different time points and that are provided by the AMF network element, the mobility analytics information of the terminal shown in Table 6.

As shown in Table 6 below, one timestamp (timestamp) may be added to the mobility analytics information of the terminal for a location of each terminal. The timestamp may be obtained from the mobility related information of the terminal returned by the AMF network element/AF network element/OAM network element.

**Table 6**

| | | | | |
|---|---|---|---|---|
| >Time slot start 1 | 2022-04-24 11:37:18 | | >Time slot start 2 | 2022-04-24 11:37:21 |
| >Duration 1 | 3s | | >Duration 2 | 5s |
| >UE location (1..max) | | | >UE location (1..max) | |
| >>UE location 11 | Cell 1 | | >>UE location 21 | Cell 3 |
| >>Timestamp (timestamp 11) | 2022-04-24 11:37:18 | | >>Timestamp (timestamp 21) | 2022-04-24 11:37:21 |
| >>UE location 12 | Cell 2 | | >>UE location 22 | Cell 4 |
| >>Timestamp (timestamp 12) | 2022-04-24 11:37:19 | | >>Timestamp (timestamp 22) | 2022-04-24 11:37:23 |
| | | | >>UE location 23 | Cell 5 |
| | | | >>Timestamp (timestamp 23) | 2022-04-24 11:37:24 |

For example, it may be learned from Table 6 that, the terminal moves between the cell 1 and the cell 2 in three seconds starting from 2022-04-24 11:37:18, and the terminal enters the cell 1 at 2022-04-24 11:37:18, and enters the cell 2 at 2022-04-24 11:37:19. In this way, the first network element may obtain a time order of a plurality of locations of the terminal based on time information of entering each location by the terminal. For different terminals, the first network element may determine an order of two terminals at a same location based on time information of each terminal at each location.

Optionally, when the first message carries the time information (for example, a time slot indicated by Time slot start 1 and Duration 1 in Table 1, and a length of the time slot is three seconds; or a time slot indicated by Time slot start 2 and Duration 2 in Table 2, and a length of the time slot is five seconds), each piece of sub-mobility analytics information is associated with one piece of time information. For example, content of sub-mobility analytics information 1 includes Time slot start 1, Duration 1, UE location 11, the timestamp 11 associated with UE location 11, UE location 12, and the timestamp 12 associated with UE location 12 in Table 1. For example, content of sub-mobility analytics information 2 includes Time slot start 2, Duration 2, UE location 21, the timestamp 21 associated with UE location 21, UE location 22, the timestamp 22 associated with UE location 22, UE location 23, and the timestamp 23 associated with UE location 23 in Table 1.

It may be understood that, with reference to Table 6, the first time period may include a plurality of sub-time periods. For example, a time slot indicated by Time slot start 1 and Duration 1 may be used as one sub-time period of the first time period, and a time slot indicated by Time slot start 2 and Duration 2 may be used as another sub-time period of the first time period.

Optionally, the mobility analytics information may further include the information about the residence time of the terminal at each location. For example, Table 7 shows mobility analytics information carrying information about residence time provided in embodiments of this application.

**Table 7 Mobility analytics information carrying information about residence time**

| | | | | |
|---|---|---|---|---|
| >Time slot start 1 | 2022-04-24 11:37:18 | | >Time slot start 2 | 2022-04-24 11:37:21 |
| >Duration 1 | 3s | | >Duration 2 | 5s |
| >UE location (1..max) | | | >UE location (1..max) | |
| >>UE location 11 | Cell (cell) 1 | | >>UE location 21 | Cell (cell) 3 |
| >>Timestamp (timestamp 11) | 2022-04-24 11:37:18 | | >>Timestamp (timestamp 21) | 2022-04-24 11:37:21 |
| >>residence time 11 | 1s | | >>residence time 21 | 2s |
| >>UE location 12 | Cell (cell) 2 | | >>UE location 22 | Cell (cell) 2 |
| >>Timestamp (timestamp 12) | 2022-04-24 11:37:19 | | >>Timestamp (timestamp 22) | 2022-04-24 11:37:23 |
| >>residence time 11 | 2s | | >>residence time 22 | 1s |
| | | | >>UE location 23 | Cell (cell) 5 |
| >Time slot start 1 | 2022-04-24 11:37:18 | | >Time slot start 2 | 2022-04-24 11:37:21 |
| | | | >>Timestamp (timestamp 23) | 2022-04-24 11:37:24 |
| | | | >>residence time 23 | 2s |

For example, it may be learned from Table 7 that, the UE moves between the cell (cell) 1 and the cell (cell) 2 in three seconds starting from 2022-04-24 11:37:18. The UE enters the cell 1 at 2022-04-24 11:37:18 and residence time of the UE in the cell 1 is 1s. The UE enters the cell 2 at 2022-04-24 11:37:19 and residence time of the UE in the cell 2 is 2s.

In a possible implementation of this application, regardless of whether the first network element provides the second indication information, the data analytics network element may include, in the mobility analytics information of the terminal, the information about the residence time of the terminal at each location.

In another possible implementation of this application, when the first network element provides the second indication information for the data analytics network element, the data analytics network element includes, in the mobility analytics information of the terminal, the information about the residence time of the terminal at each location.

It may be understood that, in addition to processing the mobility analytics information into a form of a table, for example, a form of Table 6 to Table 12, the data analytics network element may use content of Table 6 as an example, and the mobility analytics information may also use the following manner: {(Time slot start 1, 2022-04-24 11:37:18), (Duration 1=3s), (UE location 11=cell 1, timestamp=2022-04-24 11:37:18), (UE location 12=cell 2, timestamp=2022-04-24 11:37:19)}, {(Time slot start 2, 2022-04-24 11:37:21), (Duration 2=5s), (UE location 21=cell 3, timestamp=2022-04-24 11:37:21), (UE location 22=cell 4, timestamp=2022-04-24 11:37:23), and (UE location 23=cell 5, timestamp=2022-04-24 11:37:24)}.

For example, for Table 7, one sub-time period is used as an example, and the content of the mobility analytics information is as follows: {(Time slot start 1, 2022-04-24 11:37:18), (Duration 1=3s), (UE location 11=cell 1, timestamp=2022-04-24 11:37:18, residence time 11=1s), and (UE location 12=cell 2, timestamp=2022-04-24 11:37:19, residence time 12=2s)}.

Manner (2): Locations that are of the terminal, that are included in the mobility analytics information, and that are at different time points are sorted in a preset time order.

In manner (2), the mobility analytics information includes each location that are of the terminal and that are sorted in a time order in each sub-time period of the first time period. In other words, in manner (2), after obtaining each location of the terminal and the time information associated with each location from the first network element, the data analytics network element may sort all the locations of the terminal in the first time period in a time order based on the time information associated with each location, or sort all the locations in any sub-time period of the first time period in ascending or descending time order. It may be understood that, if the terminal is at a same location at different time points, the sorting may include the following results: a location 1, a location 2, and a location 1, or a location 1, a location 1, and a location 2. When two or more locations that are adjacent in time are the same, when performing location sorting, the data analytics network element may include only a location at an earliest time point.

In a possible implementation of this application, when determining the mobility analytics information, the data analytics network element may divide the first time period into one or more sub-time periods, and then determine time information associated with each location of the terminal in each sub-time period. In other words, the mobility analytics information includes one or more pieces of sub-mobility analytics information, and each piece of sub-mobility analytics information includes each location that are of the terminal and that are sorted in a time order in one sub-time period of the first time period.

For example, after obtaining the time information of the terminal at each location from the second network element, the data analytics network element may sort a plurality of locations of the terminal in the same sub-time period in a time order based on the time information of the terminal at each location, to obtain the mobility analytics information of the terminal, as shown in Table 8.

**Table 8 A plurality of locations, included in mobility analytics information, sorted in a time order**

| | | | |
|---|---|---|---|
| >Time slot start 1 | 2022-04-24 11:37:18 | >Time slot start 2 | 2022-04-24 11:37:21 |
| >Duration 1 | 3s | >Duration 2 | 5s |
| >UE location (1..max) | | >UE location (1..max) | |
| >>UE location 11 | Cell (cell) 1 | >>UE location 21 | Cell (cell) 3 |
| >>UE location 12 | Cell (cell) 2 | >>UE location 22 | Cell (cell) 4 |
| | | >>UE location 23 | Cell (cell) 5 |

For example, it may be learned from Table 8 that, the terminal moves between the cell (cell) 1 and the cell (cell) 2 in three seconds starting from 2022-04-24 11:37:18. Because a location of the cell 1 is before a location of the cell 2, it indicates that the terminal is first located in the cell 1 and then moves from the cell 1 to the cell 2. The terminal moves among the cell (cell) 3 to the cell (cell) 5 in five seconds starting from 2022-04-24 11:37:21, and the terminal is first located in the cell 3, then moves from the cell 3 to the cell 4, and then moves from the cell 4 to the cell 5.

Optionally, the mobility analytics information shown in Table 8 may further carry a number of each location. For example, a location number of the cell 1 is 1, and a location number of the cell 2 is 2.

It may be understood that, the data analytics network element may sort a plurality of locations in a same time slot in ascending or descending time order. This is not limited in embodiments of this application. Specifically, to help the first network element understand a time order of sorted locations of the terminal that moves in a same time slot, a manner of sorting the locations may be negotiated by the first network element and the data analytics network element or indicated by the first network element to the data analytics network element. For example, the first network element indicates the data analytics network element to rank a location that the terminal first enters in a same time slot first (for example, the cell 1), and rank a location that the terminal last enters in a same time slot last (for example, the cell 2).

Alternatively, when the data analytics network element provides the first network element with a sorting result of a plurality of locations in a same sub-time period, the data analytics network element may further indicate, to the first network element, whether the sorting result is in ascending time order or in descending time order.

In a possible implementation of this application, regardless of whether the first network element provides the second indication information, the data analytics network element may include, in the mobility analytics information of the terminal, the information about the residence time of the terminal at each location.

In another possible implementation of this application, when the first network element provides the second indication information for the data analytics network element, the data analytics network element includes, in the mobility analytics information of the terminal, the information about the residence time of the terminal at each location.

For example, Table 9 shows the information about the residence time that is associated with each location sorted in a time order and that is included in the mobility analytics information.

**Table 9**

| >Time slot start 1 | 2022-04-24 11:37:18 | >Time slot start 2 | 2022-04-24 11:37:21 |
|---|---|---|---|
| >Duration 1 | 3s | >Duration 2 | 5s |
| >UE location (L.max) | | >UE location (1..max) | |
| >>UE location 11 | Cell (cell) 1 | >>UE location 21 | Cell (cell) 3 |
| >>residence time 11 | 1s | >>residence time 21 | 1s |
| >>UE location 12 | Cell (cell) 2 | >>UE location 22 | Cell (cell) 4 |
| >>residence time 12 | 2s | >>residence time 22 | 2s |
| | | >>UE location 23 | Cell (cell) 5 |
| | | >>residence time 23 | 2s |

It may be learned from Table 9 that, an order in which the terminal moves between the cell 1 and the cell 2 is: moving from the cell 1 to the cell 2. Residence time 11 associated with the cell 1 is 1s, which indicates that residence time of the terminal in the cell 1 is 1s. Residence time 11 associated with the cell 2 is 2s, which indicates that residence time of the terminal in the cell 2 is 2s.

Manner (3): Each time slot (one sub-time period) includes a location of only one terminal.

In manner (3), the first time period includes one or more sub-time periods, and the mobility analytics information includes one location of the terminal in each sub-time period and the first time information. The first time information is a time point at which the terminal starts to enter, in the sub-time period, one location in the sub-time period. Locations of the terminal in two sub-time periods that are adjacent in time are different. As shown in Table 10, the first time period in Table 10 includes a sub-time period 1 and a sub-time period 2, where the sub-time period 1 is a time period determined by Time slot start 1 and Duration 1. The sub-time period 2 is a time period determined by Time slot start 2 and Duration 2. The sub-time period 1 includes a location of the terminal in the cell 1. The sub-time period 2 includes a location of the terminal in the cell 2.

**Table 10**

| >Time slot start 1 | 2022-04-24 11:37:18 | >Time slot start 2 | 2022-04-24 11:37:19 |
|---|---|---|---|
| >Duration 1 | 1s | >Duration 2 | 0.5s |
| >UE location (1..max) | | >UE location (L.max) | |
| >>UE location 11 | Cell 1 | >>UE location 21 | Cell 2 |

For example, the mobility analytics information includes one or more pieces of sub-mobility analytics information, and each piece of sub-mobility analytics information includes one location of the terminal in one sub-time period and the first time information. Locations included in two pieces of sub-mobility analytics information that are adjacent in time are different. For example, as shown in Table 10, the mobility analytics information includes the two pieces of sub-mobility analytics information. The first time information included in one piece of sub-mobility analytics information is Time slot start 1, and a location is the cell 1. The first time information included in the other piece of sub-mobility analytics information is Time slot start 2, and a location is the cell 2.

In a possible implementation of this application, the mobility analytics information further includes duration of each sub-time period included in the first time period, and duration of any sub-time period is used to reflect residence time of the terminal at a location indicated by the location. For example, the sub-time period may be Duration 1 or Duration 2 in Table 10. It may be understood that, duration of the first time period is determined by Duration 1 and Duration 2. The first time information may be Time slot start 1 or Time slot start 2 in Table 10.

In the foregoing solution, a duration indication of the sub-time period is used to reflect the residence time of the terminal at the location indicated by the location, so that additional information about the residence time is not added to the mobility analytics information. This reduces a size of the mobility analytics information.

By comparing Table 10 with any one of Table 6 to Table 9, it may be learned that, the parameter "UE location (L.max)" in Table 10 includes only a location of one terminal, namely, UE location 11, and the "time slot start" indicates a time point of entering the location. "duration" indicates residence time of the terminal at the location. The parameter "UE location (L.max)" in any one of Table 6 to Table 9 may include a location of one terminal, or may include a plurality of locations of the terminal, namely, UE location 11 and UE location 12.

In manner (1) or manner (2), as the terminal moves, the terminal may have a plurality of locations in a same sub-time period. For example, at a time point 1 in the sub-time period, the terminal is at the location 1, but at a time point 2 in the sub-time period, the terminal is at the location. However, a same sub-time period may include a plurality of same locations. In this case, the terminal moves at a slow speed or the terminal stops moving, but the AMF network element, the AF network element, or the OAM network element still collects a location of the terminal at intervals in a specific sub-time period based on a specified collection periodicity. Therefore, in this way, a plurality of same locations consecutively exist in a same sub-time period. If time information of the terminal at the plurality of same locations is included in the mobility analytics information, a large amount of redundant information is additionally generated. Such a problem of information redundancy can be avoided in manner (3). Each sub-time period includes only a location of one terminal, a start time point of the sub-time period is defined as a time point at which the terminal enters the location, and a length of the sub-time period is defined as residence time of the terminal at the location.

Manner (4): Duration of the sub-time period carried in the mobility analytics information is set as small as possible, as shown in Table 11 below. For example, the duration of the sub-time period is less than or equal to a preset time length, for example, 1 ms or 0.5 ms.

**Table 11**

| >Time slot start 1 | 2022-04-24 11:37:18 | >Time slot start 2 | 2022-04-24 11:37:19 |
|---|---|---|---|
| >Duration 1 | 1 ms | >Duration 2 | 0.5 ms |
| >UE location (1..max) | | >UE location (1..max) | |
| >>UE location 11 | Cell 1 | >>UE location 21 | Cell 2 |

In Table 11, because each time slot has only one location of the terminal, the "time slot start" in Table 11 indicates a time point at which the terminal enters the location, and the "duration" may be set to an extremely short time period, for example, 1 ms/1 ns. An objective of this manner is as follows: In an extremely short time slot, a location of the terminal usually does not change greatly. Therefore, a case in which there are a plurality of locations of the terminal in a same time slot in manner (1) and manner (2) does not occur, and a time order of locations of the terminal may be identified by start time points of different time slots.

If the data analytics network element further receives the second indication information, as shown in Table 12, the mobility analytics information may further include information about residence time (residence time) associated with each location. The information about the residence time may be obtained by performing subtraction between timestamps at different locations after the start time points of the different time slots are sorted in ascending or descending time order.

**Table 12**

| >Time slot start 1 | 2022-04-24 11:37:18 | >Time slot start 2 | 2022-04-24 11:37:19 |
|---|---|---|---|
| >Duration 1 | 1 ms | >Duration 2 | 0.5 ms |
| >UE location (1..max) | | >UE location (L.max) | |
| >>UE location 11 | Cell 1 | >>UE location 21 | Cell 2 |
| >>residence time 11 | 2s | residence time 21 | 1s |

In a possible implementation of this application, the data analytics network element may not carry the first indication information when requesting the mobility related information of the terminal from the second network element. In this way, although the second network element can provide time information of the terminal at the locations for the data analytics network element, generally, the provided time information of the terminal at the locations may not be sorted in a time order. In this case, after obtaining the time information of the terminal at the locations from the second network element, the data analytics network element may divide the time information of the terminal at the locations based on a time period, to obtain the time information of the terminal at the locations in each time period, which is specifically the content shown in Table 6 to Table 12. For example, the second network element is the AMF network element. The mobility related information of the terminal provided by the AMF network element for the data analytics network element may be shown in Table 13.

**Table 13 Mobility related information of a terminal collected from an AMF network element**

| Data type | Description |
|---|---|
| UE ID | Identifier of UE, namely, an SUPI |
| UE locations (1..max) | UE location |
| >UE location 11 | Cell 1 |
| >Timestamp 11 | 2022-04-24 11:37:18 |
| >UE location 12 | Cell 2 |
| >Timestamp 12 | 2022-04-24 11:37:19 |
| >UE location 21 | Cell 3 |
| >Timestamp 21 | 2022-04-24 11:37:21 |
| >UE location 22 | Cell 4 |
| >Timestamp 22 | 2022-04-24 11:37:23 |
| >UE location 23 | Cell 5 |
| >Timestamp 23 | 2022-04-24 11:37:24 |

It may be understood that, an example in which all locations of the terminal in one time period are placed in one table is used in Table 13. Certainly, in an actual process, the AMF network element may also provide a plurality of pieces of mobility related information for the data analytics network element, and each piece of mobility related information includes one location of the terminal and time information of the terminal that enters the location.

In this way, the data analytics network element may process Table 13 according to a preset rule (for example, duration of a time slot), to obtain the mobility analytics information reflected in any one of Table 6 to Table 12.

For example, the data analytics network element may consider 2022-04-24 11:37:18 to 2022-04-24 11:37:24 as the first time period, and split the first time period into two sub-time periods. In other words, 2022-04-24 11:37:18 to 2022-04-24 11:37:19 is a sub-time period 1, and 2022-04-24 11:37:21 to 2022-04-24 11:37:24 is a sub-time period 2. Then, the data analytics network element may separately add timestamps to UE location 11 and UE location 12 of the terminal in the sub-time period 1, separately add timestamps to UE location 21 to UE location 23 of the terminal in the sub-time period 2, and add start time points and duration of the sub-time period 1 and the sub-time period 2, to obtain the mobility analytics information shown in Table 6. Optionally, the data analytics network element may further determine, based on a difference between timestamps of two locations that are adjacent in time in Table 13, residence time of the terminal at each location, and then associate the residence time with each location, to obtain the content shown in Table 7.

Certainly, the data analytics network element may also indicate the second network element to arrange the mobility related information of the terminal when collecting the mobility related information of the terminal, and then send the arranged information to the data analytics network element. In this case, the foregoing step 302 may be implemented in the following manner: The data analytics network element sends a second message to the second network element. The second message is used to request the second network element to provide mobility related information of the terminal in a second time period. The data analytics network element receives the mobility related information from the second network element, where the mobility related information includes each location of the terminal in the second time period and time information associated with each location, and the time information is a time point of entering the location.

In a possible implementation of this application, the data analytics network element may also negotiate with the second network element about whether the data analytics network element or the second network element provides information used to determine a time order of the locations of the terminal. For example, if the data analytics network element and the second network element negotiate that the second network element provides the information used to determine the time order of the locations of the terminal, the data analytics network element may omit a process of sending the second indication information to the second network element.

In a possible implementation of this application, the second message carries third indication information, and the third indication information indicates to provide the data analytics network element with mobility related information used to determine a time order of one or more locations of the terminal in the second time period. Correspondingly, the mobility related information provided by the second network element further includes information about a plurality of locations that are of the terminal in the second time period and that are sorted in ascending or descending order of the time information, as shown in Table 14. Alternatively, the mobility related information further includes one location of the terminal in each sub-time period of the second time period and second time information, as shown in Table 15. The second time information is a time point at which the terminal enters a location associated with the sub-time period in the sub-time period, and locations of the terminal are different in two sub-time periods that are adjacent in time. Optionally, the second time period includes the first time period, and details are not described herein again.

**Table 14 Content of mobility related information provided by an AMF network element based on third indication information**

| Data type | Description | Timestamp | Residence time |
|---|---|---|---|
| UE ID | Identifier of UE, namely, an SUPI | | |
| UE locations (1..max) | UE location | | |
| >UE location 11 | Cell 1 | >Timestamp 11=2022-04-24 11:37:18 | >residence time 11=1s |
| >UE location 12 | Cell 2 | >Timestamp 12=2022-04-24 11:37:19 | >residence time 12=2s |
| >UE location 21 | Cell 3 | >Timestamp 21=2022-04-24 11:37:21 | >residence time 21=2s |

Optionally, when the mobility related information provided by the AMF network element for the data analytics network element further includes the information about the plurality of locations that are of the terminal in the second time period and that are sorted in ascending or descending time order, the mobility related information may optionally further include the residence time of the terminal at each location.

**Table 15 Content of mobility related information provided by an AMF network element based on third indication information**

| Data type | Description |
|---|---|
| UE ID | Identifier of UE, namely, an SUPI |
| UE locations (1..max) | UE location |
| Sub-time period 1 2022-04-24 11:37:18 | |
| >UE location 11 | Cell 1 |
| >Timestamp 11 | 2022-04-24 11:37:18 |
| Sub-time period 2 2022-04-24 11:37:19 | |
| >UE location 12 | Cell 2 |
| >Timestamp 12 | 2022-04-24 11:37:19 |

Table 15 shows that the mobility related information further includes one location of the terminal in each sub-time period (for example, the sub-time period 1 and the sub-time period 2) of the second time period and the second time information. For example, the second time information may be 2022-04-24 11:37:19 or 2022-04-24 11:37:18.

In a possible implementation of this application, the second time period is a past time period, and the first time period is a future period of time. In this case, the data analytics network element may predict, based on the mobility related information of the terminal in the second time period, a time order of the locations of the terminal in each sub-time period included in the first time period, to obtain the mobility analytics information.

In a possible implementation of this application, the second message further carries fourth indication information, and the fourth indication information indicates to provide the data analytics network element with the information about the residence time of the one or more locations of the terminal in the second time period; and the mobility related information further includes the information used to determine the residence time of the terminal at each location in the second time period.

When the data analytics network element provides the third indication information for the second network element, content of the mobility related information fed back by the second network element to the data analytics network element may be shown in Table 13 to Table 15. When the data analytics network element determines to derive a statistical result of mobility of the UE, step 303 may be implemented in the following manner: The data analytics network element may arrange the mobility related information to obtain the mobility analytics information, for example, arrange the content in Table 13 to Table 15 to obtain Table 6 to Table 12. If the data analytics network element determines that a prediction result of the mobility of the UE is derived, the foregoing step 303 may be implemented in the following manner: The data analytics network element obtains, based on the mobility related information, the mobility analytics information that is used to predict the time order of the locations of the terminal in each sub-time period of the first time period and that is used to predict information about residence time of the terminal at a specific location.

Optionally, in addition to providing the third indication information for the second network element, the data analytics network element may further provide the fourth indication information for the data analytics network element. The fourth indication information indicates the second network element to report information about the residence time of the terminal at each location. In this way, after receiving the fourth indication information, the second network element may obtain the information about the residence time of the terminal at each location based on time information of locations that are adjacent in time. Then, the mobility related information fed back by the second network element to the data analytics network element may include the information about the residence time of the terminal at each location.

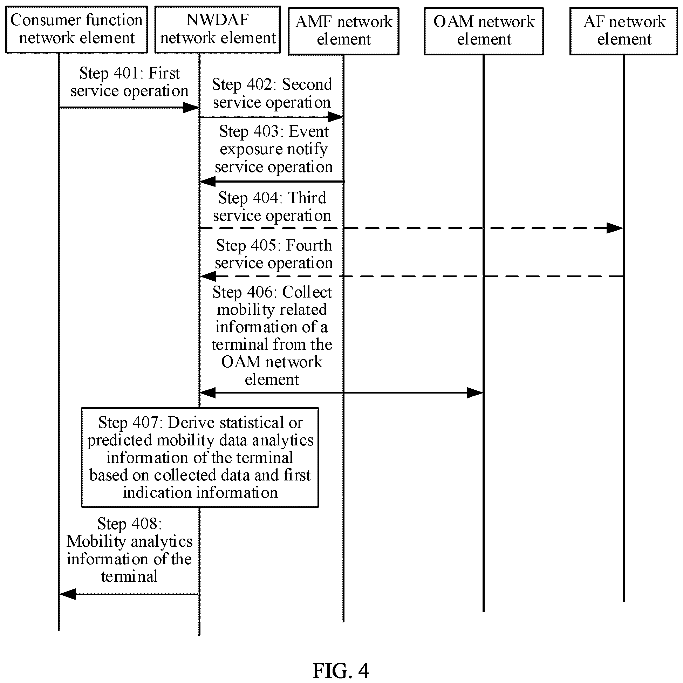

A specific embodiment of a data analytics method provided in an embodiment of this application is described below by using an example in which the first network element is a consumer NF network element, the data analytics network element is an NWDAF network element, and one or more second network elements include an AMF network element, an AF network element, and an OAM network element. As shown in FIG. 4, the method includes the following steps.

Step 401: The consumer NF network element sends a first service operation (corresponding to the foregoing first message) to the NWDAF network element. Correspondingly, the data analytics network element receives the first service operation from the consumer NF network element.

The first service operation is used to request a mobility analytics result (which may also be referred to as mobility analytics information) of a terminal from the NWDAF network element.

In an example, the first service operation may be an Nnwdaf_AnalyticsInfo_Request service operation or an Nnwdaf_AnalyticsSubscription_Subscribe service operation. Alternatively, an Nnwdaf AnalyticsInfo_Request service operation or an Nnwdaf_AnalyticsSubscription_Subscribe service operation carries the first message.

The first service operation carries an order indication (order indication) (namely, the foregoing first indication information), to indicate the NWDAF network element to provide a mobility analytics result that can determine a location order of the terminal.

Optionally (Optionally), the first service operation may further carry a residence time indication (residence time indication) (namely, the foregoing second indication information), to indicate the NWDAF network element to provide information about residence time of the terminal at each location. Optionally, the residence time indication specifically indicates the NWDAF network element to indicate, in the mobility analytics result, the information about the residence time of the terminal at each location.

In a possible implementation of this application, the first service operation further carries one or more of the following parameters:
an analytics identifier (analytics ID), for example, Analytics ID=terminal mobility (UE Mobility) in this application;
a target of mobility analytics (target of analytics reporting), namely, a single terminal or a group of terminals; and
analytics filter information (analytics filter information), such as an area of interest (AoI), used to limit a scope of data analytics. For example, areas indicated by the AoI are an area 1 and an area 2, which indicates that the consumer NF network element expects the data analytics network element to provide mobility analytics results of the terminal in the area 1 and the area 2. For example, the area 1/the area 2 may be a tracking area (Tracking Area, TA), or may be a cell. This is not limited in embodiments of this application. One area may include one or more TAs, or may include one or more cells. A tracking area identity may be a tracking area identity (TAI).

An analytics target period indicates a time period of statistics or prediction information to be obtained.

It may be understood that, if the first service operation carries the target (for example, identifiers of one or more terminals) of mobility analytics, it indicates that the consumer NF network element expects the data analytics network element to provide a mobility analytics result of each terminal indicated by the identifiers of the one or more terminals. If the first service operation does not carry the target of mobility analytics, it indicates that the consumer NF network element expects the data analytics network element to provide a mobility analytics result of each terminal in a scope of data analytics limited by the analytics filter information.

In another possible implementation of this application, the first service operation may further include one or more of the following parameters:
a maximum number of entries (maximum number of objects): indicating a maximum number of entries of returned analytics information;
a preferred level of accuracy (preferred level of accuracy of the analytics): indicating a precision level of mobility analytics information preferred by the consumer NF network element;
a preferred time slot order (preferred order of results for the time slot entries): indicating that the consumer NF network element expects the data analytics network element to sort a plurality of mobility analytics results of one terminal in ascending or descending order of start time points of the time slot; and
a preferred granularity of location information (preferred granularity of location information): indicating a granularity of location information preferred by the consumer NF network element, for example, a TA granularity or a cell granularity.

For example, if the preferred granularity of the location information is a TA, the location information included in the mobility analytics information is the TA in which the terminal is located. If the preferred granularity of the location information is a cell, the location information included in the mobility analytics information is the cell in which the terminal is located.

Step 402: The NWDAF network element requests mobility information (corresponding to the foregoing mobility related information) of the terminal from the AMF network element through a second service operation, and correspondingly, the AMF network element receives the second service operation from the data analytics network element.

In an example, the second service operation may be an event exposure subscribe (Namf_EventExposure_Subscribe) service operation sent by the NWDAF network element to the AMF network element.

In a possible implementation of this application, the Namf_EventExposure_Subscribe service operation carries an indication for indicating the AMF network element to report the mobility related information of the terminal.

In a possible implementation of this application, the second service operation may carry the identifiers of the one or more terminals, so that the AMF network element determines to provide the mobility related information of the terminal determined by the identifiers of the one or more terminals.

In a possible implementation of this application, the second service operation may further carry information about a second time period, so that the AMF network element determines to provide mobility related information of the terminal in the second time period.

Optionally, when the second service operation includes the information about the second time period, the mobility related information of the terminal provided by the AMF network element for the data analytics network element is mobility related information of the terminal in a first time period. For example, the first time period may be the second time period or one sub-time period in the second time period.

In a possible implementation of this application, the second service operation may further carry information about a target area, so that the AMF network element determines to provide mobility related information of the terminal in the target area.

Optionally, when the second service operation includes an identifier of a terminal 1, a third time period, and the information about the target area, it indicates that the NWDAF network element expects the AMF network element to provide mobility related information of the terminal 1 located in the target area in the third time period.

Step 403: The AMF network element sends, to the NWDAF network element through an event exposure notify service operation (Namf_EventExposurr_Notify service operation), the mobility related information of the terminal collected by the AMF network element. Correspondingly, the NWDAF network element receives the Namf_EventExposure_Notify service operation from the AMF network element.

It may be understood that, the Namf EventExposure_Notify service operation carries the mobility information of the terminal collected by the AMF.

Content of the mobility related information of the terminal collected by the AMF network element is shown in Table 1. Details are not described herein again.

Step 404: The NWDAF network element requests mobility related service data (corresponding to the foregoing first information) of the terminal from the AF network element through a third service operation, and correspondingly, the AF network element receives the third service operation from the NWDAF network element.

In an example, the third service operation may be an event exposure subscribe (Naf_EventExposure_Subscribe) service operation sent by the NWDAF network element to the AF network element. The Naf_EventExposure_Subscribe service operation is used to request the AF network element to provide the mobility related service data of the terminal. The third service operation may carry an indication indicating the AF network element to provide the mobility related service data of the terminal. This is not limited in embodiments of this application.

In a possible implementation of this application, the third service operation may include one or more of the following information: the identifiers of the one or more terminals, the information about the target area, information about a target time period, and information about a target application.

In a possible implementation of this application, when the third service operation carries the identifier of the terminal, it indicates that the NWDAF network element expects the AF network element to determine mobility related information of a specified terminal.

In a possible implementation of this application, when the third service operation carries the information about the target application, it indicates that the NWDAF network element expects the AF network element to determine mobility related information of the one or more terminals that access the target application.

In a possible implementation of this application, when the third service operation carries the information about the target time period, it indicates that the NWDAF network element expects the AF network element to determine mobility related information of the terminal in the target time period.

An example in which the third service operation includes the target time period and the target application is used. In this case, the AF network element may determine to provide the NWDAF network element with the mobility related information of the one or more terminals that access the target application in the target time period. In addition, if the third service operation further includes the identifier of the terminal 1 in addition to the target time period and the target application, the AF network element may determine to provide the NWDAF network element with mobility related information of the terminal 1 that accesses the target application in the target time period.

Step 405: After collecting the mobility related information of the terminal, the AF network element sends the mobility related information of the terminal to the NWDAF network element through a fourth service operation. Correspondingly, the NWDAF network element receives the mobility related information of the terminal from the AF network element through the fourth service operation.

The AF network element in step 404 and step 405 may be an AF network element inside a core network or a third-party AF network element. This is not limited in embodiments of this application.

In an example, the fourth service operation may be an event exposure notify (Naf_EventExposure_Notify) service operation sent by the AF network element to the NWDAF network element.

Step 406: The NWDAF network element collects the mobility related information of the terminal from the OAM network element.

It may be understood that, the NWDAF network element may obtain the mobility related information of the terminal from one or more network elements of the AF network element, the AMF network element, or the OAM network element. In other words, the NWDAF network element may perform one of step 402, step 404, and step 406, or may perform all the steps.

Step 407: The NWDAF network element derives statistical or predicted mobility data analytics information of the terminal based on the collected data and the first indication information.

For specific implementation of step 407, refer to the descriptions in Table 6 to Table 12. Details are not described herein again.

Step 408: The NWDAF network element sends the mobility analytics information of the terminal to the consumer NF network element through an analytics information response (Nnwdaf AnalyticsInfo_Response) service operation or an analytics information subscription notify (Nnwdaf_AnalyticsSubscription_Notify) service operation.

In the embodiment shown in FIG. 4, the consumer NF network element carries the order indication when subscribing to/requesting the mobility analytics information of the terminal from the NWDAF network element, to indicate the NWDAF network element to carry, in the mobility analytics information of the terminal in one of the four manners in the embodiment, information indicating a location order of the terminal, to assist the consumer NF network element in performing data processing or information decision-making.

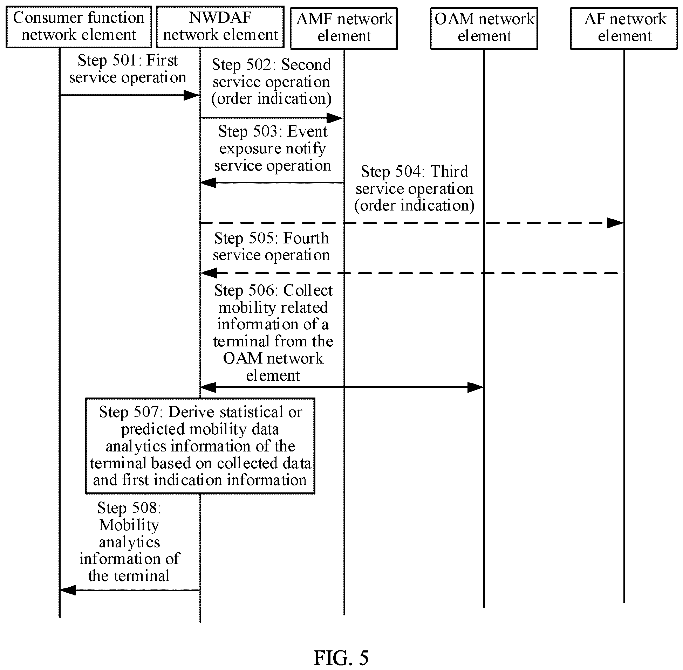

FIG. 5 is a specific embodiment of another data analytics method according to an embodiment of this application. The method includes the following steps.

Step 501 is the same as step 401, and details are not described herein again.

Step 502: The NWDAF network element requests mobility information (corresponding to the foregoing mobility related information) of a terminal from an AMF network element through a second service operation, and correspondingly, the AMF network element receives a second service operation from a data analytics network element. The second service operation carries an order indication.

Optionally, the second service operation may further carry a residence time indication.

For specific descriptions of the second service operation, refer to the descriptions in step 402. Details are not described herein again.

Step 503: The AMF network element collects the mobility information of the terminal based on the second service operation, to obtain mobility related information of the terminal requested by the NWDAF network element.

It may be understood that, because the second service operation carries the order indication, after collecting the mobility information of the terminal (as shown in Table 1), the AMF network element may process the collected mobility information, to obtain the content shown in Table 6, Table 8, Table 10, or Table 11. To be specific, the mobility related information sent by the AMF network element to the NWDAF network element may be shown in Table 6, which includes time information of the terminal at each location in one time period. Alternatively, the mobility related information sent by the AMF network element to the NWDAF network element may be shown in Table 8, which includes a time-based ascending or descending sorting result of each location of the terminal in one period of time. Alternatively, the mobility related information sent by the AMF network element to the NWDAF network element may be shown in Table 10: One location of the terminal is included in one time period.

In a possible implementation of this application, when the second service operation carries the residence time indication, after collecting the mobility information of the terminal (as shown in Table 1), the AMF network element may process the collected mobility information, to obtain the content shown in Table 7, Table 9, and Table 12. To be specific, the mobility related information sent by the AMF network element to the NWDAF network element may be shown in Table 7, which includes time information of the terminal at each location in one time period and information about residence time of the terminal at each location. Alternatively, the mobility related information sent by the AMF network element to the NWDAF network element may be shown in Table 9, which includes a time-based ascending or descending sorting result of each location of the terminal in one period of time, and information about residence time of the terminal at each location. Alternatively, the mobility related information sent by the AMF network element to the NWDAF network element may be shown in Table 12: One location of the terminal and information about residence time of the terminal at each location are included in one time period.

It may be understood that, when the second service operation carries the order indication, a difference between the solution shown in FIG. 5 and the solution shown in FIG. 4 lies in: In FIG. 4, the NWDAF network element arranges the content shown in Table 1, to obtain the content shown in Table 6, Table 8, Table 10, or Table 11. In FIG. 5, the AMF network element arranges the content shown in Table 1, to obtain the content shown in Table 6, Table 8, Table 10, or Table 11.

Specifically, the information about the residence time of the terminal at each location may be determined by the AMF network element based on time information associated with each location that is adjacent in time.

Step 504 is the same as step 403. A difference lies in: In step 403, the mobility related information of the terminal is not processed as in step 503, but in step 504, the mobility related information of the terminal is processed by the AMF network element.

Step 505 to step 509 are the same as step 404 to step 408, and details are not described herein again.

However, a difference between step 505 to step 509 and step 404 to step 408 lies in: In step 505 and step 507, when requesting the mobility related information of the terminal from the AF network element or an OAM network element, the NWDAF network element further provides the order indication and/or the residence time indication for the AF network element or the OAM network element. In this case, the AF network element or the OAM network element may process the collected content shown in Table 2, to obtain the content shown in Table 6 to Table 15, and provide the content as the mobility related information of the terminal for the NWDAF network element.

A difference between step 508 and step 408 lies in: In step 508, because the AMF/AF/OAM has performed required processing on data based on the order indication and the residence time indication, the NWDAF network element only needs to process the collected information to obtain mobility analytics information, for example, determine start time information and duration information of each sub-time period included in the first time period. If a prediction result of mobility of the terminal is derived, after obtaining the prediction result, the NWDAF network element further needs to process the prediction result based on the order indication and the residence time indication, to indicate a time order of a UE location and information about residence time of UE at a specific location in the predicted UE mobility analytics result.

In the embodiment shown in FIG. 5, when requesting/subscribing to the mobility related information of the terminal from the AMF network element/AF network element/OAM network element, the NWDAF network element may carry the order indication and/or the residence time indication, to indicate that the AMF network element/AF network element/OAM network element can indicate, in the provided mobility related information of the terminal, a time order of locations of the terminal and information about residence time of the terminal at a specific location, and assist the consumer NF network element in performing data processing or information decision-making.

It should be noted that, when the NDWAF network element does not provide the order indication and the residence time indication for the AMF network element/AF network element/OAM network element, the AMF network element/AF network element/OAM network element may also process the collected mobility information of the terminal, to obtain mobility related information indicating a time order of locations of the terminal and information about residence time of the terminal at a specific location.

The foregoing mainly describes the solutions in embodiments of this application from a perspective of interaction between network elements. It may be understood that, to implement the foregoing functions, the network elements such as the first network element and the data analytics network element include corresponding structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the first network element and the data analytics network element based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In actual implementation, another division manner may be used.

The foregoing describes the method in embodiments of this application with reference to FIG. 3 to FIG. 5. The following describes a communication apparatus that is provided in embodiments of this application and that performs the foregoing method. A person skilled in the art may understand that, the method and the apparatus may be mutually combined and referenced. The communication apparatus provided in embodiments of this application may perform the steps performed by the first network element and the data analytics network element in the data analytics method shown in FIG. 3 to FIG. 5.

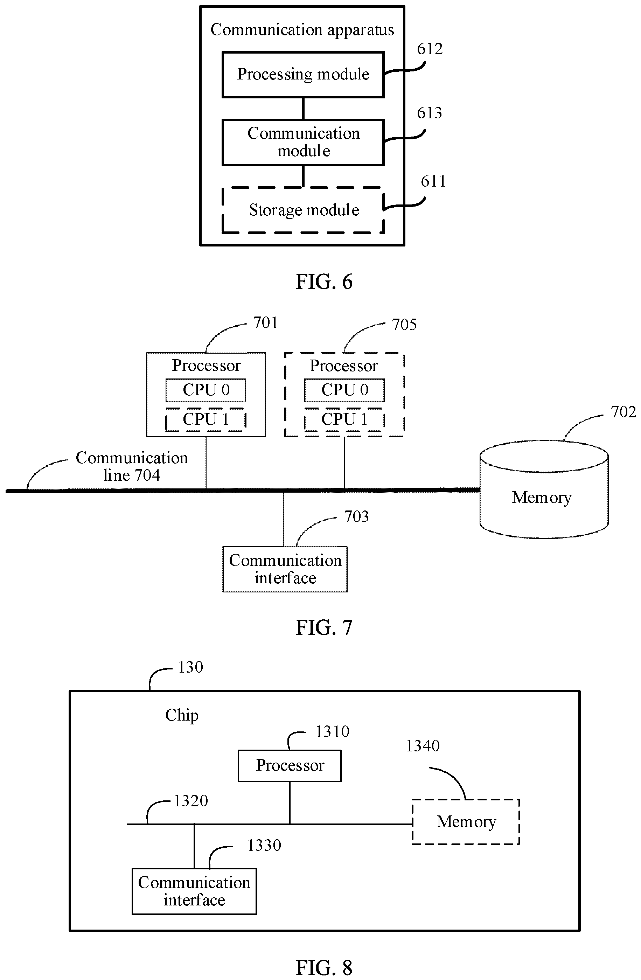

When the integrated unit is used, FIG. 6 shows a communication apparatus in the foregoing embodiment. The communication apparatus may include a communication module 613 and a processing module 612.

In an optional implementation, the communication apparatus may further include a storage module 611, configured to store program code and data of the communication apparatus.

In an example, the communication apparatus is a first network element or a chip used in the first network element. In this case, the communication module 613 is configured to support the communication apparatus in communicating with an external network element (for example, a data analytics network element). For example, the communication module 613 is configured to perform a signal receiving and sending operation performed by the first network element in the foregoing method embodiment. The processing module 612 is configured to perform a signal processing operation performed by the first network element in the foregoing method embodiment.

According to an aspect, in an embodiment of this application, the communication module 613 is configured to perform a receiving action performed by the first network element in step 304 in FIG. 3 and a sending action performed by the first network element in step 301 in the foregoing embodiment. The processing module 612 is configured to support the communication apparatus in performing a process of performing decision-making based on mobility analytics information of a terminal.

In yet another example, the communication apparatus is a data analytics network element, or a chip used in a data analytics network element. In this case, the communication module 613 is configured to support the communication apparatus in communicating with an external network element (for example, a first network element, an AF network element/AMF network element, or a network management network element). For example, the communication module 613 is configured to perform a signal receiving and sending operation performed by the data analytics network element in the foregoing method embodiment. The processing module 612 is configured to perform a signal processing operation performed by the data analytics network element in the foregoing method embodiment.

According to an aspect, in an embodiment of this application, the communication module 613 is configured to perform a sending action performed by the data analytics network element in step 304 in FIG. 3 and a receiving action performed by the data analytics network element in step 301 and step 302 in the foregoing embodiment. The processing module 612 is configured to support the communication apparatus in performing the processing action step 303 performed by the data analytics network element.

The processing module 612 may be a processor or a controller. For example, the processing module 612 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module 612 is a processor 701 or a processor 705, the communication module 613 is a communication interface 703, and the storage module 611 is a memory 702, the communication apparatus in this application may be a communication device shown in FIG. 7.

FIG. 7 is a diagram of a hardware structure of a communication device according to an embodiment of this application. For structures of the first network element and the data analytics network element in embodiments of this application, refer to a diagram of a structure of a communication device shown in FIG. 7. The communication device includes the processor 701, a communication line 704, and at least one communication interface (where the communication interface 703 is used as an example in FIG. 7 for description).

The processor 701 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 704 may include a path for transmitting information between the foregoing components.

The communication interface 703 is configured to exchange information with another apparatus by using, for example, any type of apparatus such as a transceiver, and is configured to communicate with another device or a communication network, for example, an Ethernet, a radio access network (radio access network, RAN), or a wireless local area network (wireless local area network, WLAN).

Optionally, the communication device may further include a memory 702.

The memory 702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the communication line 704. The memory may alternatively be integrated with the processor.

The memory 702 is configured to store computer-executable instructions for performing the solutions of this application, and the processor 701 controls execution. The processor 701 is configured to execute the computer-executable instructions stored in the memory 702, to implement a data analytics method provided in the following embodiments of this application.

Optionally, the computer-executable instructions in embodiments of this application may also be referred to as application program code. This is not specifically limited in embodiments of this application.

During specific implementation, in an embodiment, the processor 701 may include one or more CPUs, for example, a CPU 0 and a CPU 1 in FIG. 7.

During specific implementation, in an embodiment, the communication device may include a plurality of processors, for example, the processor 701 and a processor 705 in FIG. 7. Each processor may be a single-core (single-CPU) processor, or may be a multi-core (multi-CPU) processor. The processor herein may be one or more devices, circuits, and/or processing cores configured to process data (for example, computer program instructions).

For steps performed by the processor 701 and the processor 705, refer to the steps performed by the processing module 612. For steps performed by the communication interface 703, refer to the steps performed by the communication module 613.

FIG. 8 is a diagram of a structure of a chip 130 according to an embodiment of this application. The chip 130 includes one or more than two (including two) processors 1310 and a communication interface 1330.

Optionally, the chip 130 further includes a memory 1340. The memory 1340 may include a read-only memory and a random access memory, and provide operation instructions and data for the processor 1310. A part of the memory 1340 may further include a non-volatile random access memory (non-volatile random access memory, NVRAM).

In some implementations, the memory 1340 stores the following elements: an executable module or a data structure, a subset thereof, or an extended set thereof.

In embodiments of this application, a corresponding operation is performed by invoking the operation instructions (the operation instructions may be stored in an operating system) stored in the memory 1340.

In a possible implementation, structures of a first network element and a data analytics network element are similar, and different apparatuses may use different chips to implement respective functions.

The processor 1310 controls a processing operation of either the first network element or the data analytics network element, and the processor 1310 may also be referred to as a central processing unit (central processing unit, CPU).

The memory 1340 may include a read-only memory and a random access memory, and provide instructions and data for the processor 1310. A part of the memory 1340 may further include an NVRAM. For example, in an application, the memory 1340, the communication interface 1330, and the memory 1340 are coupled together by using a bus system 1320. In addition to a data bus, the bus system 1320 may include a power bus, a control bus, a status signal bus, and the like. However, for clear descriptions, various types of buses in FIG. 8 are marked as the bus system 1320.

The methods disclosed in embodiments of this application may be applied to the processor 1310, or may be implemented by the processor 1310. The processor 1310 may be an integrated circuit chip and has a signal processing capability. In the implementation process, each step of the foregoing method may be completed by using an integrated logical circuit of hardware in the processor 1310 or instructions in a form of software. The processor 1310 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1340. The processor 1310 reads information in the memory 1340, and completes the steps of the foregoing methods in combination with hardware of the processor 1310.

In a possible implementation, the communication interface 1330 is configured to perform the receiving and sending steps of the first network element in embodiments shown in FIG. 3 to FIG. 5. The processor 1310 is configured to perform the processing steps of the first network element in embodiments shown in FIG. 3 to FIG. 5.

In another possible implementation, the communication interface 1330 is configured to perform the receiving and sending steps of the data analytics network element in embodiments shown in FIG. 3 to FIG. 5. The processor 1310 is configured to perform the processing steps of the data analytics network element in embodiments shown in FIG. 3 to FIG. 5.

According to an aspect, a computer-readable storage medium is provided. The computer-readable storage medium stores instructions. When the instructions are run, the functions performed by the data analytics network element in FIG. 3 to FIG. 5 are implemented.

According to an aspect, a computer-readable storage medium is provided. The computer-readable storage medium stores instructions. When the instructions are run, the functions performed by the first network element in FIG. 3 to FIG. 5 are implemented.

According to an aspect, a computer program product including instructions is provided. The computer program product includes the instructions. When the instructions are run, the functions performed by the data analytics network element in FIG. 3 to FIG. 5 are implemented.

According to an aspect, a computer program product including instructions is provided. The computer program product includes the instructions, and when the instructions are run, functions performed by the first network element in FIG. 3 to FIG. 5 are implemented.

According to an aspect, a chip is provided. The chip is used in a first network element. The chip includes at least one processor and a communication interface. The communication interface is coupled to the at least one processor. The processor is configured to run instructions, to implement functions performed by the first network element in FIG. 3 to FIG. 5.

According to an aspect, a chip is provided. The chip is used in a data analytics network element. The chip includes at least one processor and a communication interface. The communication interface is coupled to the at least one processor. The processor is configured to run instructions, to implement functions performed by the data analytics network element in FIG. 3 to FIG. 5.

Embodiments of this application provide a communication system. The communication system includes a first network element and a data analytics network element. The first network element is configured to perform functions performed by the first network element in FIG. 3 to FIG. 5, and the data analytics network element is configured to perform functions performed by the data analytics network element in FIG. 3 to FIG. 5.

Optionally, the system may further include one or more of an AMF network element, an AF network element, or an OAM network element, configured to perform the steps performed by the AMF network element, the AF network element, or the OAM network element in FIG. 4 or FIG. 5.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. Alternatively, the usable medium may be an optical medium, for example, a digital video disc (digital video disc, DVD). Alternatively, the usable medium may be a semiconductor medium, for example, a solid-state drive (solid-state drive, SSD).

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data analytics method, comprising:
receiving, by a data analytics network element, first indication information from a first network element, wherein the first indication information indicates to provide the first network element with mobility analytics information used to determine a time order of one or more locations of a terminal in a first time period;
obtaining, by the data analytics network element, mobility related information of the terminal from a second network element;
processing, by the data analytics network element, the mobility related information based on the first indication information, to obtain the mobility analytics information, wherein the mobility analytics information comprises information used to determine the time order of the one or more locations of the terminal in the first time period; and
sending, by the data analytics network element, the mobility analytics information to the first network element.

2. The method according to claim 1, wherein the method further comprises:
receiving, by the data analytics network element, second indication information from the first network element, wherein the second indication information indicates the data analytics network element to provide information about residence time of the terminal at each location.

3. The method according to claim 1 or 2, wherein the sending, by the data analytics network element, the mobility analytics information to the first network element further comprises:
sending the information about residence time of the terminal at each location to the first network element.

4. The method according to any one of claims 1 to 3, wherein the first time period comprises one or more sub-time periods, the terminal has one or more locations in each sub-time period, the sub-time period corresponds to one piece of time information and duration of the sub-time period, and the time information of the sub-time period is a start time point of the sub-time period.

5. The method according to any one of claims 1 to 4, wherein the mobility analytics information comprises time information of each location of the terminal in each sub-time period of the first time period, the time information is a time point at which the terminal enters the location in the sub-time period, and time information corresponding to any location indicates a time order of the each location in the one or more locations in the sub-time period.

6. The method according to any one of claims 1 to 4, wherein the mobility analytics information comprises information about the one or more locations that are of the terminal in each sub-time period of the first time period and that are sorted in ascending or descending time order.

7. The method according to any one of claims 1 to 3, wherein the first time period comprises one or more sub-time periods, the mobility analytics information comprises one location of the terminal in each sub-time period and first time information, the first time information is a time point at which the terminal enters the location in the sub-time period, and locations of the terminal are different in two sub-time periods that are adjacent in time.

8. The method according to claim 7, wherein the mobility analytics information further comprises duration of the sub-time period, and the duration of the sub-time period is used to reflect information about residence time of the terminal at the location.

9. The method according to claim 7, wherein duration of the sub-time period is less than a preset time length.

10. The method according to claim 5, 6, or 9, wherein the mobility analytics information further comprises the information used to determine the residence time of the terminal at each location.

11. The method according to any one of claims 1 to 10, wherein the obtaining, by the data analytics network element, mobility related information of the terminal from a second network element comprises:
sending, by the data analytics network element, a second message to the second network element, wherein the second message is used to request the second network element to provide mobility related information of the terminal in a second time period; and
receiving, by the data analytics network element, the mobility related information from the second network element, wherein the mobility related information comprises information about each location of the terminal in the second time period and time information associated with each location, and the time information is a time point of entering the location.

12. The method according to claim 11, wherein the second message carries third indication information, and the third indication information indicates to provide the data analytics network element with mobility related information used to determine a time order of the locations of the terminal in the second time period; and
the mobility related information further comprises information about a plurality of locations that are of the terminal in the second time period and that are sorted in ascending or descending order of the time information; or
the mobility related information further comprises one location of the terminal in each sub-time period of the second time period and second time information, wherein the second time information is a time point at which the terminal enters the location of the sub-time period in the sub-time period, and locations of the terminal are different in two sub-time periods that are adjacent in time.

13. The method according to claim 11 or 12, wherein the second message further carries fourth indication information, and the fourth indication information indicates to provide the data analytics network element with information about residence time of the terminal at one or more locations in the second time period; and
the mobility related information further comprises information used to determine residence time of the terminal at each location in the second time period.

14. A computer-readable storage medium, wherein the readable storage medium stores instructions; and when the instructions are executed, the method according to any one of claims 1 to 13 is implemented.

15. A chip, wherein the chip comprises a processor, the processor is coupled to a communication interface, the processor is configured to run a computer program or instructions, to implement the method according to any one of claims 1 to 13, and the communication interface is configured to communicate with a module other than the chip.

16. A communication apparatus, wherein the apparatus is a data analytics network element or a chip used in the data analytics network element, the apparatus comprises a communication unit and a processing unit, the processing unit is configured to perform the processing step performed by the data analytics network element in the method according to any one of claims 1 to 13, and the communication unit is configured to perform the receiving/sending step performed by the data analytics network element in the method according to any one of claims 1 to 13.

17. A communication system, wherein the system comprises a data analytics network element and a first network element communicating with the data analytics network element, the first network element is configured to provide first indication information for the data analytics network element, and the data analytics network element is configured to perform the method according to any one of claims 1 to 13.
